# EUROPEAN PATENT SPECIFICATION

(11) **EP 3 351 574 B1**
(45) Date of publication and mention of the grant of the patent: **21.12.2022**
(21) Application number: 16846616.7
(22) Date of filing: 16.09.2016
(51) Int. Cl.: C08G 18/66, C08G 18/38, C08G 18/48, C08G 18/72, C08K 5/1545, G02B 1/04, G02B 5/23, G02B 7/12, C08G 18/73, C08G 18/75, C08G 18/76, C08G 18/24, G02B 7/02, C08K 5/151

(54) **POLYMERIZABLE COMPOSITION FOR OPTICAL MATERIALS, OPTICAL MATERIAL OBTAINED FROM SAID COMPOSITION, AND PLASTIC LENS**
POLYMERISIERBARE ZUSAMMENSETZUNG FÜR OPTISCHE MATERIALIEN, AUS DIESER ZUSAMMENSETZUNG HERGESTELLTES OPTISCHES MATERIAL UND KUNSTSTOFFLINSE
COMPOSITION POLYMÉRISABLE POUR MATÉRIAUX OPTIQUES, MATÉRIAU OPTIQUE OBTENU À PARTIR DE LADITE COMPOSITION, ET LENTILLE EN MATIÈRE PLASTIQUE

(30) Priority: 16.09.2015 JP 2015183495; 27.10.2015 JP 2015211249; 09.12.2015 JP 2015240359
(43) Date of publication of application: 25.07.2018
(73) Proprietor: Mitsui Chemicals, Inc., Minato-ku Tokyo 105-7122 (JP)
(72) Inventor: KASORI, Yuuki, Omuta-shi Fukuoka 836-8610 (JP); KADOWAKI, Shinichiro, Omuta-shi Fukuoka 836-8610 (JP); KAWATO, Nobuo, Omuta-shi Fukuoka 836-8610 (JP)
(74) Representative: Mewburn Ellis LLP
(86) International application number: PCT/JP2016/077423
(87) International publication number: WO 2017/047745

(56) References cited:
- WO-A1-2015/115648
- JP-A- H05 214 254
- JP-A- 2002 265 738
- JP-A- 2003 327 454
- JP-A- 2014 208 843
- US-A1- 2003 044 620

## Description

### TECHNICAL FIELD

The present invention relates to a polymerizable composition for an optical material including a photochromic compound, an optical material obtained from the composition, and a plastic lens.

### BACKGROUND ART

Plastic lenses are lighter and harder to break than inorganic lenses, and thus are rapidly spreading to optical elements such as spectacle lenses and camera lenses. Recently, a plastic lens having a photochromic performance has been developed.

Among them, a lens obtained from poly(thio) urethane is attracting attention because the lens has a high refractive index and excellent physical properties such as strength.

Patent Document 1 discloses a lens formed of a composition including a photochromic compound and a di(meth)acrylate compound, and Patent Documents 2 and 3 disclose a lens in which a coating layer including a photochromic compound is provided on a surface of a thiourethane-based plastic lens. Patent Document 4 discloses a compound having photochromic characteristics.

Patent Document 5 discloses a polymerizable composition for an optical material including at least one kind of isocyanate compound selected from an aliphatic isocyanate compound and an alicyclic isocyanate compound, a difunctional or higher functional active hydrogen compound, and a photochromic compound.

In a case where an optical material having a photochromic performance formed of poly (thio) urethane is intended to be obtained, in Patent Document 6, it is considered that an appropriate space in which an isomerization reaction of a photochromic compound easily occurs is formed in a matrix molecular chain by adding a predetermined polythiol compound, and as a result, a satisfactory photochromic performance is realized.

Patent Document 15 discloses poly(thio)urethane articles such as lenses having a photochromic layer. The articles comprise a non-elastomeric poly(urea-urethane) substrate having free isocyanato surface groups and at least a partial coating of a photochromic polymeric coating.

### RELATED DOCUMENT

### PATENT DOCUMENT

[Patent Document 1] Japanese Unexamined Patent Publication No. H08-272036
[Patent Document 2] Japanese Unexamined Patent Publication No. 2005-23238
[Patent Document 3] Japanese Unexamined Patent Publication No. 2008-30439
[Patent Document 4] Japanese Unexamined Patent Publication No. 2011-144181
[Patent Document 5] Pamphlet of International Publication WO2014/002844
[Patent Document 6] Pamphlet of International Publication
[Patent Document 7] US Patent No. 6506538
[Patent Document 8] Japanese Unexamined Patent Publication No. 2005-305306
[Patent Document 9] Pamphlet of International Publication WO2005/087829
[Patent Document 10] Pamphlet of International Publication WO2006/109765
[Patent Document 11] Pamphlet of International Publication WO2007/020817
[Patent Document 12] Pamphlet of International Publication WO2007/020818
[Patent Document 13] Pamphlet of International Publication WO2014/002844
[Patent Document 14] Pamphlet of International Publication WO2012/149599

### [Patent Document 151

US2003/044620

### SUMMARY OF THE INVENTION

### TECHNICAL PROBLEM

However, some of the optical materials having a photochromic performance obtained under the above conditions of the compositions did not have sufficient stability against a light wavelength in an ultraviolet region in some cases.

Generally, for this problem, an ultraviolet absorber is used. The photochromic compound exhibits an effect due to ultraviolet rays, while an ultraviolet absorber absorbs ultraviolet rays. Therefore, in a case where an ultraviolet absorber generally used in an optical resin is included together with the photochromic compound, a photochromic performance may decrease. For this reason, a coating layer including a photochromic compound is formed on a lens including an ultraviolet absorber, such that a photochromic performance is maintained and also stability with respect to the light wavelength of the ultraviolet region is achieved.

However, in such a lens, a coating layer is required to be separately formed, and thus the manufacturing process is complicated. On the other hand, as described above, in a case where an ultraviolet absorber and a photochromic compound exist together in the lens, suppression of deterioration of an optical material and maintenance of a photochromic performance are in a trade-off relationship.

In view of such problems of the related art, the present inventors diligently conducted research to develop a polymerizable composition capable of providing a lens allowing both maintenance of the photochromic performance and the improvement of the stability with respect to the light wavelength of an ultraviolet region.

### SOLUTION TO PROBLEM

The present inventors have found that the above problems can be solved, in a case of including a polyisocyanate and an active hydrogen compound and using a specific polyol compound, by causing the ultraviolet absorber and the photochromic compound to exist together, so as to conceive the present invention.

The present invention can be provided below.

In a first aspect there is provided
a polymerizable composition for an optical material, including: a polyisocyanate compound (A);
a polyol compound (B) having a number average molecular weight of 100 or more;
a difunctional or higher functional active hydrogen compound (C), wherein the compound (C) does not contain the compound (B);
a photochromic compound (D); and
an ultraviolet absorber (E) as claimed in claim 1

In the polymerizable composition for an optical material of the first aspect the polyisocyanate compound (A) may be at least one kind selected from the group consisting of hexamethylene diisocyanate, pentamethylene diisocyanate, xylylene diisocyanate, isophorone diisocyanate, bis(isocyanatomethyl) cyclohexane, dicyclohexylmethane diisocyanate, 2,5-bis(isocyanatomethyl) bicyclo-[2.2.1]-heptane, 2,6-bis(isocyanatomethyl) bicyclo-[2.2.1]-heptane, tolylene diisocyanate, phenylene diisocyanate, and diphenylmethane diisocyanate.

In the polymerizable composition for an optical material the polyol compound (B) may be a diol type or a triol type of polyethylene glycol or polypropylene glycol.

In the polymerizable composition for an optical material a number average molecular weight of the polyol compound (B) may be 200 to 4,000.

In the polymerizable composition for an optical material a number average molecular weight of the polyol compound (B) may be 400 to 2,000.

In the polymerizable composition for an optical material a number average molecular weight of the polyol compound (B) may be 600 to 1500.

In the polymerizable composition for an optical material the active hydrogen compound (C) may be at least one kind selected from the group consisting of a polyol compound, a polythiol compound, and a thiol compound having a hydroxy group.

In the polymerizable composition for an optical material the active hydrogen compound (C) may be a trifunctional or higher functional active hydrogen compound.

In the polymerizable composition for an optical material the active hydrogen compound (C) may be at least one kind selected from the group consisting of glycerin, pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate).

In the polymerizable composition for an optical material the photochromic compound (D) is at least one kind selected from Formulae (1) and (2),

PC-L-Chain (1)

PC-L-Chain-L'-PC' (2)

wherein, in Formula (1) or (2), PC and PC' represent monovalent groups derived from compounds of Formulae (3) to (6), and PC and PC' may be identical to or different from each other. 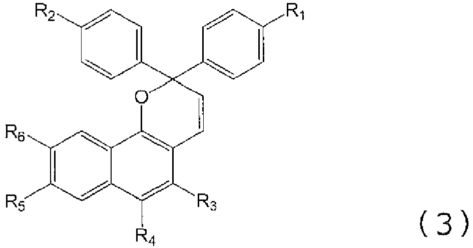 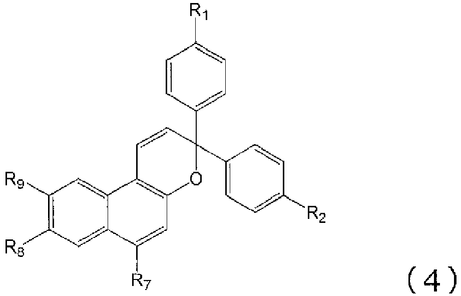 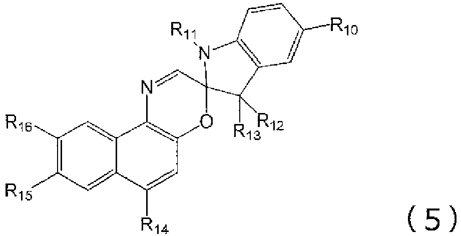 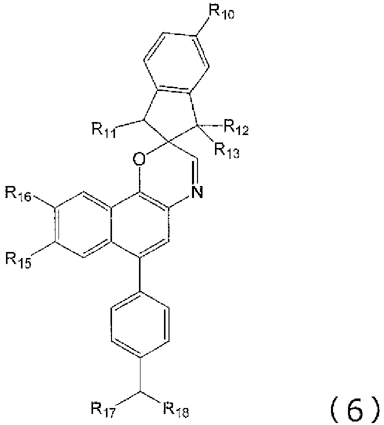
wherein, in Formulae (3) to (6), R₁ to R₁₈ represent hydrogen, a halogen atom, a carboxyl group, an acetyl group, a formyl group, an optionally substituted C1 to C20 aliphatic group, an optionally substituted C3 to C20 alicyclic group, and an optionally substituted C6 to C20 aromatic organic group, and may be identical to or different from each other. The aliphatic group, the alicyclic group, or the aromatic organic group may contain an oxygen atom and/or a nitrogen atom, and any one group included in the compound represented by Formulae (3) to (6) is bonded to L or L' which is a divalent organic group,
wherein, in Formula (1) or (2), L and L' each represent a divalent organic group including at least one kind of group selected from an oxyethylene chain, an oxypropylene chain, a (thio)ester group, and a (thio)amide group, and
wherein, in Formula (1) or (2), Chain represents a monovalent or divalent organic group including at least one kind of chain selected from a polysiloxane chain and a polyoxyalkylene chain.

In the polymerizable composition for an optical material the ultraviolet absorber (E) is an ultraviolet absorber in which a maximum absorption wavelength is 330 nm or less, and a ratio of an absorbance at 360 nm with respect to an absorbance at the maximum absorption wavelength is 0.1 or less.

In the polymerizable composition for an optical material the ultraviolet absorber (E) may be included in an amount of 200 to 14,000 ppm.

In the polymerizable composition for an optical material may further include a light stabilizer (F).

In the polymerizable composition for an optical material the light stabilizer (F) may be a hindered amine-based light stabilizer.

In the polymerizable composition for an optical material the light stabilizer (F) may be included in an amount of 500 to 5,000 ppm.

A molded product comprising a cured product of the polymerizable composition for an optical material is claimed in claim 10.

An optical material comprising the molded product is claimed in claim 11.

A plastic lens comprising the molded product is claimed in claim 12.

In another aspect a plastic polarized lens is provided including:
a polarizing film; and
a substrate layer which comprises the molded product and is formed on at least one surface of the polarizing film.

The plastic lens may be manufactured by a method including:
a step of mixing a polyisocyanate compound (A),
a polyol compound (B) having a number average molecular weight of 100 or more,
a difunctional or higher functional active hydrogen compound (C), wherein the compound (C) does not contain the compound (B),
a photochromic compound (D), as defined above and
an ultraviolet absorber (E) as defined above to prepare a polymerizable composition for an optical material; and
a step of casting and polymerizing the polymerizable composition for an optical material in a casting mold to form a lens substrate.

In the method of manufacturing a plastic lens the step of preparing the polymerizable composition for an optical material may further includes- a step of mixing a light stabilizer (F).

The plastic polarized lens may be manufactured by a method including: a step of mixing a polyisocyanate compound (A),
a polyol compound (B) having a number average molecular weight of 100 or more,
a difunctional or higher functional active hydrogen compound (C), wherein the compound (C) does not contain the compound (B),
a photochromic compound (D), as defined above and
an ultraviolet absorber (E) as defined above to prepare a polymerizable composition for an optical material;
a step of fixing a polarizing film in a lens casting mold in a state of being separated from molds;
a step of injecting the polymerizable composition for an optical material to at least one of cavities formed between the polarizing film and the molds; and
a step of polymerizing and curing the polymerizable composition for an optical material and laminating a substrate layer on at least one surface of the polarizing film.

In the method of manufacturing a plastic polarized lens the step of preparing the polymerizable composition for an optical material may further include a step of mixing a light stabilizer (F).

According to the polymerizable composition for an optical material of the present invention, it is possible to obtain a polyurethane-based optical material or a polythiourethane-based optical material including a photochromic compound having superior light resistance capable of exhibiting stable photochromic performance and suppressing deterioration in photochromic performance over time.

The polymerizable composition for an optical material according to the present invention can obtain an optical material including an ultraviolet absorber and a photochromic compound, and a coating layer does not need to be separately formed. Therefore, manufacturing stability of the optical material is excellent.

### DESCRIPTION OF EMBODIMENTS

The polymerizable composition for an optical material of the present invention is described with reference to the following embodiment.

The polymerizable composition for an optical material of the present embodiment includes
a polyisocyanate compound (A);
a polyol compound (B) having a number average molecular weight of 100 or more;
a difunctional or higher functional active hydrogen compound (C), wherein the compound (C) does not contain the compound (B);
a photochromic compound (D); and
an ultraviolet absorber (E).

It is assumed that the polymerizable composition for an optical material according to the present embodiment includes the compounds (A) to (C), and thus effectively suppresses impediment to an isomerization reaction of the photochromic compound (D) in the polymer matrix of the composition. That is, it is considered that, an appropriate space in which an isomerization reaction of photochromic compound easily occurs is formed in a matrix molecular chain by adding the compound (B), which is an essential component of the present embodiment, to a resin in the related art used for lenses for spectacles including the compounds (A) and (C), and also light resistance is increased owing to the effect of the ultraviolet absorber (E). As a result, a satisfactory photochromic performance is realized. With this configuration, it is possible to provide an optical material having a beneficial balance of effects such as a high photochromic performance and excellent mechanical properties that are characteristics of a poly(thio)urethane-based resin.

Hereinafter, respective components are described.

### [Polyisocyanate compound (A)]

Examples of the polyisocyanate compound (A) include an aliphatic polyisocyanate compound such as hexamethylene diisocyanate, pentamethylene diisocyanate, 2,2,4-trimethylhexane diisocyanate, 2,4,4-trimethylhexamethylene diisocyanate, lysine diisocyanatomethyl ester, lysine triisocyanate, m-xylylene diisocyanate, o-xylylene diisocyanate, p-xylylene diisocyanate, xylylene diisocyanate, α, α, α', α' -tetramethylxylylene diisocyanate, bis(isocyanatomethyl) naphthalene, 1,3,5-tris(isocyanatomethyl) benzene, bis(isocyanatomethyl) sulfide, bis(isocyanatoethyl) sulfide, bis(isocyanatomethyl) disulfide, bis(isocyanatoethyl) disulfide, bis(isocyanatomethylthio) methane, bis(isocyanatoethylthio) methane, bis(isocyanatoethylthio) ethane, and bis(isocyanatomethylthio) ethane;
an alicyclic polyisocyanate compound such as isophorone diisocyanate, bis(isocyanatomethyl) cyclohexane, 1,2-bis(isocyanatomethyl) cyclohexane, 1,3-bis(isocyanatomethyl) cyclohexane, 1,4-bis(isocyanatomethyl) cyclohexane, dicyclohexylmethane diisocyanate, dicyclohexylmethane-4,4'-diisocyanate, dicyclohexylmethane-2,4'-diisocyanate, cyclohexane diisocyanate, methyl cyclohexane diisocyanate, dicyclohexyl dimethyl methane isocyanate, 2,5-bis(isocyanatomethyl) bicyclo-[2.2.1]-heptane, 2,6-bis(isocyanatomethyl) bicyclo-[2.2.1]-heptane, 3,8-bis(isocyanatomethyl) tricyclodecane, 3,9-bis(isocyanatomethyl) tricyclodecane, 4,8-bis(isocyanatomethyl) tricyclodecane, and 4,9-bis(isocyanatomethyl) tricyclodecane;
an aromatic polyisocyanate compound such as diphenyl sulfide-4,4-diisocyanate, tolylene diisocyanate, phenylene diisocyanate, 1,3-phenylene diisocyanate, 1,4-phenylene diisocyanate, and diphenylmethane diisocyanate; and
a heterocyclic polyisocyanate compound such as 2,5-diisocyanatothiophene, 2,5-bis(isocyanatomethyl) thiophene, 2,5-diisocyanatotetrahydrothiophene, 2,5-bis(isocyanatomethyl) tetrahydrothiophene, 3,4-bis(isocyanatomethyl) tetrahydrothiophene, 2,5-diisocyanato-1,4-dithiane, 2,5-bis(isocyanatomethyl)-1,4-dithiane, 4,5-diisocyanato-1,3-dithiolane, and 4,5-bis(isocyanatomethyl)-1,3-dithiolane. As the polyisocyanate compound (A), at least one kind selected from these can be used.

Examples of the polyisocyanate compound (A) include a modified product and/or a mixture with a modified product, in addition to monomers, and examples of the modified products of isocyanate include a multimer, a biuret-modified product, an allophanate-modified product, an oxadiazinetrione-modif ied product, and a polyol-modified product. Examples of the multimer include a dimer such as uretdione, uretimine, and carbodiimide, and a trimer or higher multimer such as isocyanurate and iminooxadiane dione.

The polyisocyanate compound (A) is preferably hexamethylene diisocyanate, pentamethylene diisocyanate, m-xylylene diisocyanate, isophorone diisocyanate, bis(isocyanatomethyl) cyclohexane, dicyclohexylmethane diisocyanate, 2,5-bis(isocyanatomethyl) bicyclo-[2.2.1]-heptane, 2,6-bis(isocyanatomethyl) bicyclo-[2.2.1]-heptane, tolylene diisocyanate, phenylene diisocyanate, and diphenylmethane diisocyanate, and
more preferably isophorone diisocyanate, m-xylylene diisocyanate, bis(isocyanatomethyl) cyclohexane, dicyclohexylmethane diisocyanate, 2,5-bis(isocyanatomethyl) bicyclo-[2.2.1]-heptane, and 2,6-bis(isocyanatomethyl) bicyclo-[2.2.1]-heptane. These polyisocyanate compounds may be used singly or two or more kinds may be used in a mixture.

### [Polyol compound (B)]

According to the present embodiment, as the polyol compound (B), at least one kind of compound selected from the compound having a number average molecular weight of 100 or more may be used.

Examples of the polyol compound (B) include polyethylene glycol and polypropylene glycol, the compound may include a low molecular weight oligomer such as ethylene glycol, diethylene glycol, and triethylene glycol, and the compound may be used singly or may be used as a mixture of two or more kinds thereof. According to the present embodiment, the polyethylene glycol or the polypropylene glycol includes diol types or triol types thereof.

The polyol compound (B), for example, may be a compound obtained by adding ethylene oxide, propylene oxide, or ε-caprolactone to trifunctional or higher functional alcohol. Examples thereof include an ethylene oxide adduct of glycerol, an ethylene oxide adduct of trimethylolpropane, an ethylene oxide adduct of pentaerythritol, a propylene oxide adduct of glycerol, a propylene oxide adduct of trimethylolpropane, a propylene oxide adduct of pentaerythritol, caprolactone modified glycerol, caprolactone-modified trimethylolpropane, and caprolactone-modified pentaerythritol.

A lower limit of the number average molecular weight of the polyol compound (B) is 100 or more, preferably 200 or more, more preferably 300 or more, even more preferably 400 or more, and particularly preferably 600 or more, and an upper limit thereof is 4, 000 or less, more preferably 3,000 or less, even more preferably 2,000 or less, and particularly preferably 1,500 or less. The upper limit and the lower limit may be appropriately combined.

The number average molecular weight of the polyol compound (B) being in the above range allows a photochromic performance to be effectively exhibited without deteriorating the excellent characteristics such as the mechanical strength of a poly(thio)urethane resin.

For example, in a case where the polyol compound (B) is polyethylene glycol, the number average molecular weight being 400 to 2,000 further improves color developability performance and suppresses cloudiness of a resin molded product.

In a case where the polyol compound (B) is polypropylene glycol, the number average molecular weight being 400 to 2000 further improves color developability performance and suppresses cloudiness of a resin molded product.

The resin molded product obtained from polypropylene glycol exhibit higher heat resistance and stiffness, compared with the resin molded product obtained from polyethylene glycol. Accordingly, polypropylene glycol may be more preferable than polyethylene glycol for use in various environments and conditions such as spectacle lenses, in some cases.

Examples of the polyol compound (B) include a polyethylene glycol adduct or a polypropylene glycol adduct, of 1,4-butanediol, 3-methyl-1,5-pentanediol, 1,9-nonanediol, 1,4-bis(hydroxyethoxy) benzene, 1,3-bis(m-hydroxyethoxy) benzene, and 2,2-[(1,1-biphenyl)-4,4-diylbis(oxy)]bisethanol, and these may be used singly or as a mixture of two or more kinds thereof.

A lower limit of the number average molecular weight of these compounds is 200 or more, preferably 300 or more, more preferably 400 or more, even more preferably 500 or more, and particularly preferably 600 or more, and an upper limit thereof is 4, 000 or less, preferably 3,000 or less, more preferably 2,000 or less, even more preferably 1,500 or less, and particularly preferably 1,000 or less. The upper limit and the lower limit may be appropriately combined. The number average molecular weight being in the above range allows a photochromic performance to be effectively exhibited without deteriorating the excellent characteristics such as the mechanical strength of a poly(thio)urethane resin.

Examples of the polyol compound (B) include a polyethylene glycol adduct of bisphenol A or a polypropylene glycol adduct of bisphenol A, and these may be used singly or as a mixture of two or more kinds thereof.

A lower limit of the number average molecular weight of these compounds is 200 or more, preferably 300 or more, more preferably 400 or more, even more preferably 500 or more, and particularly preferably 600 or more, and an upper limit thereof is 4, 000 or less, preferably 3,000 or less, more preferably 2,000 or less, and even more preferably 1,500 or less. The upper limit and the lower limit may be appropriately combined. The number average molecular weight being in the above range allows a photochromic performance to be effectively exhibited without deteriorating the excellent characteristics such as the mechanical strength of a poly(thio)urethane resin.

Examples of the polyol compound (B) include a polyester compound formed of a diol compound and dicarboxylic acid.

A diol compound forming a polyester compound is not particularly limited, but an aliphatic diol having 2 to 12 carbon atoms in a main chain is suitably used, and examples thereof include ethylene glycol, propylene glycol, 1,4-butanediol, 3-methyl-1,5-pentanediol, and 1,9-nonanediol.

Dicarboxylic acid forming a polyester compound is not particularly limited, but aliphatic dicarboxylic acid or aromatic dicarboxylic acid having 2 to 12 carbon atoms in a main chain is suitably used, and examples thereof include succinic acid, adipic acid, sebacic acid, isophthalic acid, and terephthalic acid.

As the polyester compound, one kind or two or more kinds of these diol compounds and one kind or two or more kinds of these dicarboxylic acids may be appropriately used in combination.

A polyester compound obtained by performing ring-opening polymerization on lactone may also be used in the present embodiment.

Examples of a lactone compound include α-acetolactone, β-propiolactone, γ-butyrolactone, and δ-valerolactone. The lower limit of the number average molecular weight of these compounds is 600 or more, preferably 800 or more, more preferably 1,000 or more, and an upper limit thereof is 4,000 or less, more preferably 3,000 or less, even more preferably 2,000 or less, and particularly preferably 1,500 or less. The upper limit and the lower limit may be appropriately combined. The number average molecular weight being in the above range allows a photochromic performance to be effectively exhibited without deteriorating the excellent characteristics such as the mechanical strength of a poly(thio)urethane resin.

Using the polyol compound (B) comprised of the compound allows a photochromic performance to be effectively exhibited.

According to the present embodiment, as the polyol compound (B), at least one kind of compound selected from the exemplified compounds may be used. According to the present embodiment, a diol type or a triol type of polyethylene glycol or polypropylene glycol is preferably used, a diol type or a triol type of polypropylene glycol is more preferably used.

According to the present embodiment, the polyol compound (B) may be used in the range of 0.05 times by weight to 10 times by weight with respect to the weight of the difunctional or higher functional active hydrogen compound (C). According to the present embodiment, the compound is used in the above range so that a desired resin performance according to the type of use is exhibited while a high photochromic performance is maintained. The content is preferably in the range of 0.1 times by weight to 5 times by weight.

The times by weight of the polyol compound (B) with respect to the active hydrogen compound (C) being in the above range allows a high light control performance, that is, the high color optical density and the fast density change can be suitably exhibited. Since the crosslinking density become within the optimum range, an optical material having excellent stiffness, excellent surface hardness, and excellent heat resistance can be obtained.

### [Difunctional or higher functional active hydrogen compound (C)]

The difunctional or higher functional active hydrogen compound (C) (hereinafter, simply referred to as the "active hydrogen compound (C)") is not particularly limited, but examples thereof include a polyol compound, a polythiol compound, and a thiol compound having a hydroxy group. These may be appropriately used in combination. The active hydrogen compound (C) does not include the polyol compound (B) .

Examples of the polyol compound include aliphatic polyol such as ethylene glycol, diethylene glycol, propylene glycol, dipropylene glycol, tripropylene glycol, butylene glycol, neopentyl glycol, glycerin, trimethylol ethane, trimethylolpropane, ditrimethylolpropane, butanetriol, 1,2-methyl glucoside, pentaerythritol, dipentaerythritol, tripentaerythritol, sorbitol, erythritol, sureitol, ribitol, arabinitol, xylitol, allitol, manitole, dolcitol, iditol, glycol, inositol, hexane triol, triglycerol, diglylperol, triethylene glycol, polyethylene glycol, tris(2-hydroxyethyl) isocyanurate, cyclobutanediol, cyclopentanediol, cyclohexane diol, cycloheptanediol, cyclooctanediol, cyclohexane dimethanol, hydroxypropylcyclohexanol, tricyclo[5.2.1.0^{2,6}]decane-dimethanol, bicyclo[4.3.0]-nonanediol, dicyclohexanediol, tricyclo[5.3.1.1]dodecanediol, bicyclo[4.3.0]nonanedimethanol, tricyclo[5.3.1.1]dodecane-diethanol, hydroxypropyl tricyclo[5.3.1.1]dodecanol, spiro[3.4]octanediol, butyl cyclohexane diol, 1,1'-bicyclohexylidene diol, cyclohexane triol, maltitol, and lactose;
aromatic polyol such as dihydroxynaphthalene, trihydroxynaphthalene, tetrahydroxynaphthalene, dihydroxybenzene, benzene triol, biphenyltetraol, pyrogallol, (hydroxynaphthyl) pyrogallol, trihydroxy phenanthrene, bisphenol A, bisphenol F, xylylene glycol, di(2-hydroxyethoxy) benzene, bisphenol A-bis-(2-hydroxyethyl ether), tetrabromobisphenol A, and tetrabromobisphenol A-bis-(2-hydroxyethyl ether);
halogenated polyol such as dibromoneopentyl glycol;
a compound obtained by adding ethylene oxide, propylene oxide, or ε-caprolactone to trifunctional or higher functional alcohol such as an ethylene oxide adduct of glycerol, an ethylene oxide adduct of trimethylolpropane, an ethylene oxide adduct of pentaerythritol, a propylene oxide adduct of glycerol, a propylene oxide adduct of trimethylolpropane, a propylene oxide adduct of pentaerythritol, caprolactone modified glycerol, caprolactone-modified trimethylolpropane, and caprolactone-modified pentaerythritol; and
polymer polyol such as an epoxy resin. According to the present embodiment, at least one selected from these can be used in combination.

Other examples of the polyol compound also include a condensation reaction product of the above polyol and an organic acid such as oxalic acid, glutamic acid, adipic acid, acetic acid, propionic acid, cyclohexane carboxylic acid, β-oxocyclohexane propionic acid, dimer acid, phthalic acid, isophthalic acid, salicylic acid, 3-bromopropionic acid, 2-bromoglycol, dicarboxycyclohexane, pyromellitic acid, butanetetracarboxylic acid, and bromophthalic acid;
an addition reaction product of the above polyol and alkylene oxide such as ethylene oxide and propylene oxide;
an addition reaction product of alkylene polyamine and alkylene oxide such as ethylene oxide and propylene oxide; and further
bis-[4-(hydroxyethoxy) phenyl] sulfide, bis-[4-(2-hydroxypropoxy) phenyl] sulfide, bis-[4-(2,3-dihydroxypropoxy) phenyl] sulfide, bis-[4-(4-hydroxycyclohexyloxy) phenyl] sulfide, bis-[2-methyl-4-(hydroxyethoxy)-6-butylphenyl] sulfide, and a compound obtained by adding ethylene oxide and/or propylene oxide having three molecules or less in average per hydroxyl group to these compounds; and
sulfur atom-containing polyol such as di-(2-hydroxyethyl) sulfide, 1,2-bis-(2-hydroxyethyl mercapto) ethane, bis(2-hydroxyethyl) disulfide, 1,4-dithiane-2,5-diol, bis(2,3-dihydroxypropyl) sulfide, tetrakis(4-hydroxy-2-thiabutyl) methane, bis(4-hydroxyphenyl) sulfone (trade name BISPHENOL S), tetrabromobisphenol S, tetramethyl bisphenol S, 4,4'-thiobis(6-tert-butyl-3-methylphenol), and 1,3-bis(2-hydroxyethylthioethyl)-cyclohexane. According to the present embodiment, at least one kind selected from these may be used in combination.

Examples of the polythiol compound include an aliphatic polythiol compound such as methanedithiol, 1,2-ethanedithiol, 1,2,3-propanetrithiol, 1,2-cyclohexanedithiol, bis(2-mercaptoethyl) ether, tetrakis(mercaptomethyl) methane, diethylene glycol bis(2-mercaptoacetate), diethylene glycol bis(3-mercaptopropionate), ethylene glycol bis(2-mercaptoacetate), ethylene glycol bis(3-mercaptopropionate), trimethylolpropane tris(2-mercaptoacetate), trimethylolpropane tris(3-mercaptopropionate), trimethylol ethane tris(2-mercaptoacetate), trimethylol ethane tris(3-mercaptopropionate), pentaerythritol tetrakis(2-mercaptoacetate), pentaerythritol tetrakis(3-mercaptopropionate), bis(mercaptomethyl) sulfide, bis(mercaptomethyl) disulfide, bis(mercaptoethyl) sulfide, bis(mercaptoethyl) disulfide, bis(mercaptopropyl) sulfide, bis(mercaptomethylthio) methane, bis(2-mercaptoethylthio) methane, bis(3-mercaptopropylthio) methane, 1,2-bis(mercaptomethylthio) ethane, 1,2-bis(2-mercaptoethylthio) ethane, 1,2-bis(3-mercaptopropylthio) ethane, 1,2,3-tris(mercaptomethylthio) propane, 1,2,3-tris(2-mercaptoethylthio) propane, 1,2,3-tris(3-mercaptopropylthio) propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl) methane, tetrakis(2-mercaptoethylthiomethyl) methane, tetrakis(3-mercaptopropylthiomethyl) methane, bis(2,3-dimercaptopropyl) sulfide, 2,5-dimercaptomethyl-1,4-dithiane, 2,5-dimercapto-1,4-dithiane, 2,5-dimercaptomethyl-2,5-dimethyl-1,4-dithiane, an ester of these thioglycolic acid and mercaptopropionic acid, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropinate), 2-mercaptoethyl ether bis(2-mercaptoacetate), 2-mercaptoethyl ether bis(3-mercaptopropionate), thiodiglycolic acid bis(2-mercaptoethyl ester), thiodipropionic acid bis(2-mercaptoethyl ester), dithiodiglycolic acid bis(2-mercaptoethyl ester), dithiodipropionic acid bis(2-mercaptoethyl ester), 1,1,3,3-tetrakis(mercaptomethylthio) propane, 1,1,2,2-tetrakis(mercaptomethylthio) ethane, 4,6-bis(mercaptomethylthio)-1,3-dithiane, tris(mercaptomethylthio) methane, and tris(mercaptoethylthio) methane;
an aromatic polythiol compound such as 1,2-dimercaptobenzene, 1,3-dimercaptobenzene, 1,4-dimercaptobenzene, 1,2-bis(mercaptomethyl) benzene, 1,3-bis(mercaptomethyl) benzene, 1,4-bis(mercaptomethyl) benzene, 1,2-bis(mercaptoethyl) benzene, 1,3-bis(mercaptoethyl) benzene, 1,4-bis(mercaptoethyl) benzene, 1,3,5-trimercaptobenzene, 1,3,5-tris(mercaptomethyl) benzene, 1,3,5-tris(mercaptomethyleneoxy) benzene, 1,3,5-tris(mercaptoethyleneoxy) benzene, 2,5-toluenedithiol, 3,4-toluenedithiol, 1,5-naphthalene dithiol, and 2,6-naphthalenedithiol;
a heterocyclic polythiol compound such as 2-methylamino-4,6-dithiol-sym-triazine, 3,4-thiophenedithiol, bismuthiol, 4,6-bis(mercaptomethylthio)-1,3-dithiane, and 2-(2,2-bis(mercaptomethylthio)ethyl)-1,3-dithietane; and
the compound represented by Formula (a), but the present invention is not limited only to these exemplified compounds. According to the present embodiment, at least one kind selected from these may be used in combination.

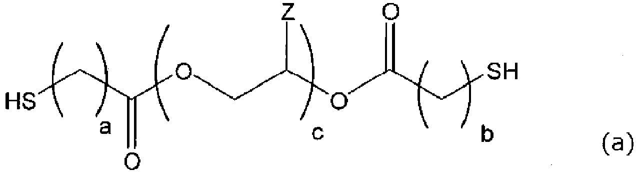

In the formula, a and b independently represent an integer of 1 to 4, and c represents an integer of 1 to 3. Z represents hydrogen or a methyl group, and in a case where a plurality of Z's exist together, Z's may be identical to or different from each other.

Examples of the thiol compound having a hydroxy group include 2-mercaptoethanol, 3-mercapto-1,2-propanediol, glycerin bis(mercaptoacetate), 4-mercaptophenol, 2,3-dimercapto-1-propanol, pentaerythritol tris(3-mercaptopropionate), and pentaerythritol tris(thioglycolate), and the present invention is not limited only to these exemplified compounds.

Oligomers of these active hydrogen compounds or a halogen-substituted product such as a chlorine-substituted product and a bromine-substituted product may be used. These active hydrogen compounds may be used singly or two or more kinds thereof may be used in a mixture.

According to the present embodiment, in view of physical properties such as mechanical strength of the obtained molded product, it is preferable that a trifunctional or higher functional active hydrogen compound is used as the active hydrogen compound (C).

Specifically, at least one kind selected from glycerin, pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate) is preferably used.

Examples of the preferable combination of the polyol compound (B) and the active hydrogen compound (C) include
a combination of polyethylene glycol with at least one kind selected from glycerin, pentaerythritol tetrakis (2-mercaptoacetate), and 4-mercaptomethyl-1,8-dimercapto-3,6-dithiaoctane,
a combination of polypropylene glycol with at least one kind selected from pentaerythritol tetrakis(2-mercaptoacetate) and 4-mercaptomethyl-1,8-dimercapto-3,6-dithiaoctane,
a combination of a polypropylene glycol adduct of bisphenol A with 4-mercaptomethyl-1,8-dimercapto-3,6-dithiaoctane,
a combination of at least one kind selected from a polyester compound formed of 3-methyl-1,5-pentanediol, adipic acid, and isophthalic acid with 4-mercaptomethyl-1,8-dimercapto-3,6-dithiaoctane,
a combination of a triol type of polypropylene glycol with a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane,
a combination of a diol type of polypropylene glycol with a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane, and
a combination of a diol type of polypropylene glycol with 4-mercaptomethyl-1,8-dimercapto-3,6-dithiaoctane, but the present invention is not limited to these combinations.

### [Photochromic compound (D)]

the photochromic compound (D) isat least one kind of photochromic compound selected from Formulae (1) and (2)

   PC-L-Chain (1)

   PC-L-Chain-L'-PC' (2)

PC and PC' represent monovalent groups derived from compounds of Formulae (3) to (6). PC and PC' may be identical to or different from each other.

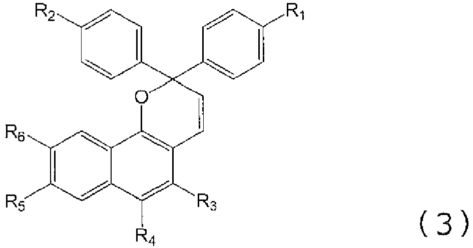

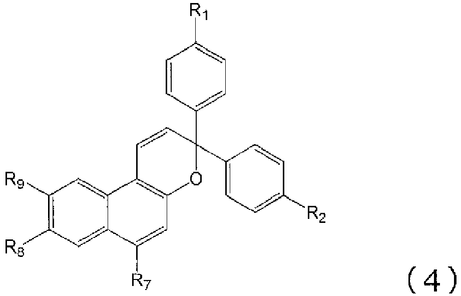

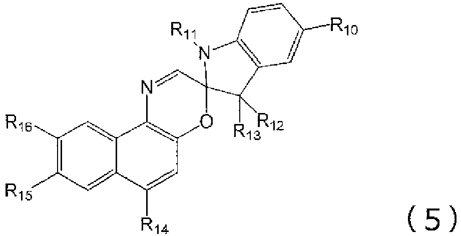

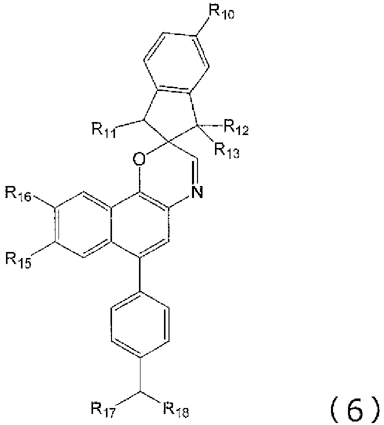

In Formulae (3) to (6), R₁ to R₁₈ represent hydrogen, a halogen atom, a carboxyl group, an acetyl group, a formyl group, an optionally substituted C1 to C20 aliphatic group, an optionally substituted C3 to C20 alicyclic group, or an optionally substituted C6 to C20 aromatic organic group, and may be identical to or different from each other. The aliphatic group, the alicyclic group, or the aromatic organic group may contain an oxygen atom and a nitrogen atom. Any one group included in the compound represented by Formulae (3) to (6) is bonded to L or L' which is a divalent organic group.

Examples of the optionally substituted C1 to C20 aliphatic group include a linear or branched C1 to C10 alkyl group, a linear or branched C1 to C10 alkoxy group, a linear or branched C2 to C10 alkenyl group, a C1 to C10 hydroxyalkyl group, a C1 to C10 hydroxyalkoxy group, a C1 to C10 alkyl group substituted with a C1 to C10 alkoxy group, a C1 to C10 alkoxy group substituted with a C1 to C10 alkoxy group, a C1 to C5 haloalkyl group, a C1 to C5 dihaloalkyl group, a C1 to C5 trihaloalkyl group, a C1 to C10 alkylamino group, a C1 to C10 aminoalkyl group, and a linear or branched C1 to C20 alkoxycarbonyl group.

Examples of the optionally substituted C3 to C20 alicyclic group include a C3 to C20 cycloalkyl group and a C6 to C20 bicycloalkyl group.

Examples of the optionally substituted C6 to C20 aromatic organic group include a phenyl group, a C7 to C16 alkoxyphenyl group, an arylamino group, a diarylamino group, an aryl C1 to C5 alkylamino group, a cyclic amino group, an arylcarbonyl group, and an aroyl group.

R₁ and R₂ each preferably include a hydrogen atom; a halogen atom;
an optionally substituted C1 to C20 aliphatic group such as a linear or branched C1 to C10 alkyl group, a linear or branched C1 to C10 alkoxy group, a C1 to C10 hydroxyalkoxy group, a C1 to C10 alkoxy group substituted with a C1 to C10 alkoxy group, a C1 to C5 haloalkyl group, a C1 to C5 dihaloalkyl group, a C1 to C5 trihaloalkyl group, a C1 to C5 alkylamino group, and; and
an optionally substituted C6 to C20 aromatic organic group such as a phenyl group, a C7 to C16 alkoxyphenyl group, a C1 to C5 dialkylamino group, an arylamino group, a diarylamino group, an aryl C1 to C5 alkylamino group, and a cyclic amino group. R₁ and R₂ may be identical to or different from each other.

Examples of R₃ preferably include a hydrogen atom; a halogen atom; a carboxyl group; an acetyl group;
an optionally substituted C1 to C20 aliphatic group such as a linear or branched C1 to C10 alkyl group, a linear or branched C2 to C10 alkenyl group, a linear or branched C1 to C10 alkoxy group, a C1 to C10 hydroxyalkyl group, a C1 to C10 alkyl group substituted with a C1 to C10 alkoxy group, a C1 to C10 aminoalkyl group, and a linear or branched C1 to C20 alkoxycarbonyl group;
an optionally substituted C3 to C20 alicyclic group such as a C3 to C20 cycloalkyl group and a C6 to C20 bicycloalkyl group; and
an optionally substituted C6 to C20 aromatic organic group such as an arylcarbonyl group, a formyl group, and an aroyl group.

Examples of R₄ preferably include a hydrogen atom; a halogen atom; a carboxyl group; an acetyl group; a formyl group;
an optionally substituted C1 to C20 aliphatic group such as a linear or branched C1 to C10 alkyl group, a linear or branched C2 to C10 alkenyl group, a linear or branched C1 to C10 alkoxy group, a C1 to C10 hydroxyalkyl group, a C1 to C10 alkyl group substituted with a C1 to C10 alkoxy group, a C1 to C10 aminoalkyl group, and a linear or branched C1 to C20 alkoxycarbonyl group;
an optionally substituted C3 to C20 alicyclic group such as a C3 to C20 cycloalkyl group and a C6 to C20 bicycloalkyl group; and
an optionally substituted C6 to C20 aromatic organic group such as an arylcarbonyl group, an aroyl group, a phenyl group, a C7 to C16 alkoxyphenyl group, a C1 to C10 dialkoxyphenyl group, a C1 to C10 alkylphenyl group, and a C1 to C10 dialkylphenyl group.

R₃ and R₄ may be bonded to each other. In a case where R₃ and R₄ are bonded to each other to form a ring structure, examples thereof include Formula (7) or (8). A dotted line portion represents a bond between a carbon atom to which R₃ is bonded and a carbon atom to which R₄ is bonded.

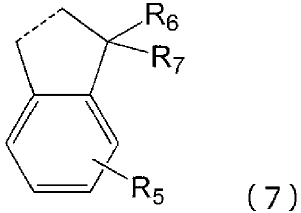

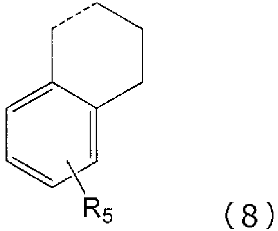

R₅, R₆, R₇, R₈, R₉, R₁₀, R₁₄, R₁₅, and R₁₆ represent functional groups as in R₁ and R₂. A plurality of R₅ to R₇ existing together may be identical to or different from each other.

R₁₁ preferably includes a hydrogen atom; a halogen atom;
an optionally substituted C1 to C20 aliphatic group such as a linear or branched C1 to C20 alkyl group, a C1 to C5 haloalkyl group, a C1 to C5 dihaloalkyl group, and a C1 to C5 trihaloalkyl group;
an optionally substituted C3 to C20 alicyclic group such as a C3 to C20 cycloalkyl group, a C6 to C20 bicycloalkyl group, a C3 to C20 cycloalkyl group substituted with a C1 to C5 alkyl group, and a C6 to C20 bicycloalkyl group substituted with a C1 to C5 alkyl group; and
an optionally substituted C6 to C20 aromatic organic group such as an aryl group which is substituted with a C1 to C5 alkyl group.

R₁₂ and R₁₃ each preferably include a hydrogen atom; a halogen atom;
an optionally substituted C1 to C20 aliphatic group such as a C1 to C10 alkyl group and a C1 to C5 alkylalkoxycarbonyl group; and an optionally substituted C3 to C20 alicyclic group such as a C5 to C7 cycloalkyl group.

R₁₇ and R₁₈ each preferably include a hydrogen atom; a halogen atom;
an optionally substituted C1 to C20 aliphatic group such as a linear or branched C1 to C10 alkyl group and a C1 to C10 hydroxyalkyl group; and an optionally substituted C3 to C20 alicyclic group such as a C5 to C7 cycloalkyl group.

In Formula (1) or (2), L and L' each represent a divalent organic group including at least one kind of group selected from an oxyethylene chain, an oxypropylene chain, a (thio) ester group, and a (thio) amide group.

Specifically, L and L' are represented by Formulae (9) to (15) . L and L' may be identical to or different from each other.

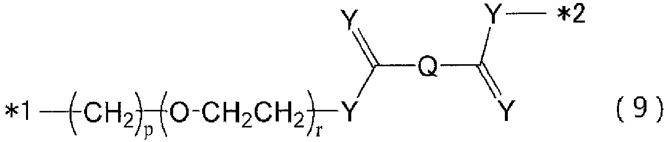

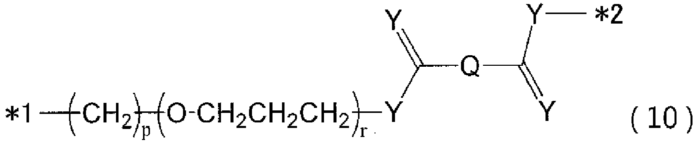

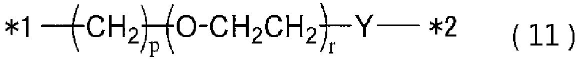

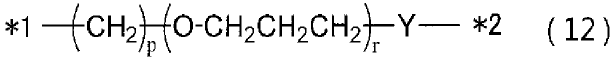

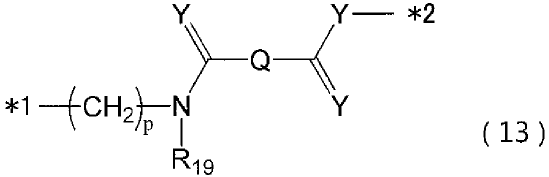

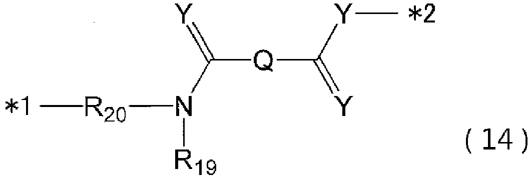

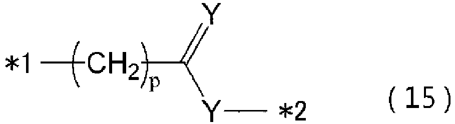

In Formulae (9) to (15),
Y represents an oxygen atom and a sulfur atom.
R₁₉ represents a hydrogen atom and a linear or branched C1 to C10 alkyl group.
R₂₀ represents a linear or branched C1 to C10 alkyl group.
p represents an integer of 0 to 15, and r represents an integer of 0 to 10.
Q represents a divalent group derived from a linear or branched C1 to C10 alkylene group,a linear or branched C1 to C10 alkenylene group, and a divalent group derived from a substituted aryl group at the 1,2-, 1,3-, and 1,4-position, and a divalent group derived from a substituted heteroaryl group.
*1 and *2 each represent a bonding hand, *1 is bonded to a monovalent or divalent organic group represented by "Chain", and *2 is bonded to a monovalent organic group represented by PC or PC'.

In Formula (1) or (2), "Chain" represents a monovalent or divalent organic group including at least one kind of chain selected from a polysiloxane chain and a polyoxyalkylene chain.

Examples of the polysiloxane chain include a polydimethylsiloxane chain, a polymethylphenylsiloxane chain, and a polymethylhydrosiloxane chain.

Examples of the polyoxyalkylene chain include a polyoxyethylene chain, a polyoxypropylene chain, and a polyoxyhexamethylene chain.

Specifically,
in a case where the photochromic compound is Formula (1), "Chain" represents a monovalent organic group of Formula (16) or (17).

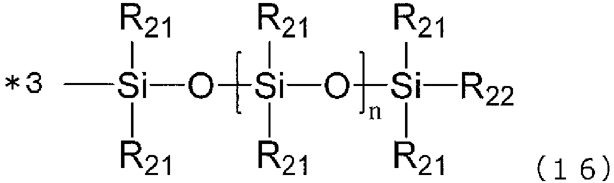

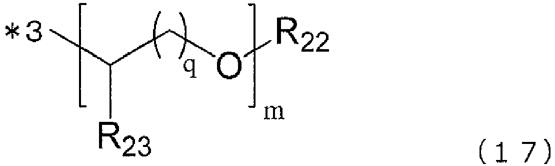

In a case where the photochromic compound is Formula (2), "Chain" represents a divalent organic group of Formula (18) or (19).

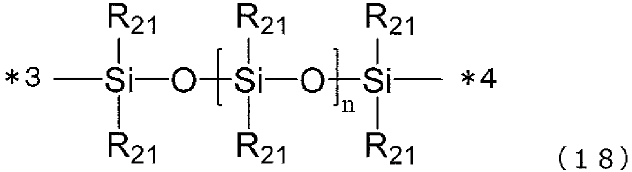

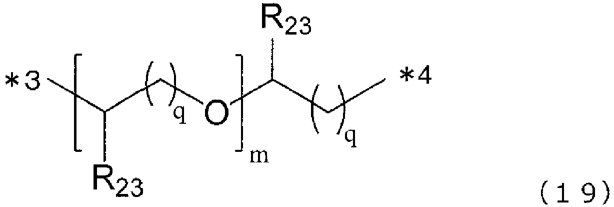

In Formulae (16) to (19),
R₂₁ represents a linear or branched C1 to C10 alkyl group.
R₂₂ represents a linear or branched C1 to C10 alkyl group.
R₂₃ represents hydrogen, a methyl group, and an ethyl group.
n represents an integer of 4 to 75, and m represents an integer of 1 to 50.
q represents an integer of 1 to 3.
*3 and *4 each represent a bonding hand, *3 is bonded to a divalent organic group represented by L, and *4 is bonded to a divalent organic group represented by L'.

The photochromic compound of the present embodiment may be obtained by methods disclosed in WO2009/146509, WO2010/20770, WO2012/149599, and WO2012/162725.

Examples of the photochromic compound according to the present embodiment include Reversacol Humber Blue (a polydimethylsiloxane chain, naphthopyran-based chromophore (Formula 3)) manufactured by Vivimed Labs Ltd., Reversacol Calder Blue (a polydimethylsiloxane chain, a naphthopyran-based chromophore (Formula 3)), Reversacol Trent Blue (a polydimethylsiloxane chain, a naphthopyran-based chromophore (Formula 3)), Reversacol Pennine Green (a polydimethylsiloxane chain, a naphthopyran-based chromophore (Formula 3)), Reversacol Heath Green (a polyoxyalkylene chain, a naphthopyran-based chromophore (Formula 3)), Reversacol Chilli Red (a polydimethylsiloxane chain, a naphthopyran-based chromophore (Formula 3)), Reversacol Wembley Grey (polyoxyalkylene chain, a naphthopyran-based chromophore (Formula 3)), and Reversacol Cayenne Red (polyoxyalkylene chain, a naphthopyran-based chromophore (Formula 3)), and the compounds may be used singly, one kind or two or more kinds in combination thereof may be used. According to the present embodiment, it is preferable to use at least one kind selected from Reversacol Trent Blue, Reversacol Heath Green, Reversacol Chilli Red, Reversacol Wembley Grey, and Reversacol Cayenne Red.

### [Ultraviolet absorber (E)]

The ultraviolet absorber (E) having an effect of improvement on light resistance, which is used in the polymerizable composition for an optical material according to the present embodiment includes a benzotriazole-based ultraviolet absorber, a triazine-based ultraviolet absorber, a benzophenone-based ultraviolet absorber, a cyanoacrylate-based ultraviolet absorber, a diphenylacrylate-based absorber, a phenolic ultraviolet absorber, an oxanilide-based ultraviolet absorber, and a malonate ester-based ultraviolet absorber. the ultraviolet absorber, (E) has a maximum absorption wavelength of 330 nm or less, and a ratio of an absorbance at 360 nm with respect to an absorbance of a maximum absorption wavelength is 0.1 or less and preferably 0.05 or less. Examples of the ultraviolet absorber include an oxanilide-based ultraviolet absorber represented by Formula (i) and a malonic ester-based ultraviolet absorber represented by Formula (ii).

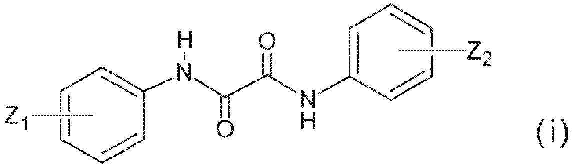

In Formula (i), Z₁ and Z₂ may be identical to or different from each other, and examples thereof include a C1 to C6 alkyl group and a C1 to C6 alkoxy group.

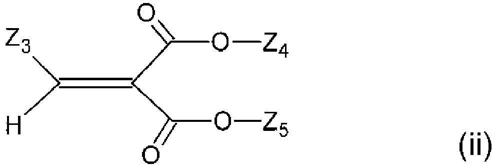

In Formula (ii), examples of Z₃ include an optionally substituted C6 to C20 aromatic organic group and an optionally substituted C5 to C20 alicyclic group, Z₄ and Z₅ may be identical to or different from each other, and examples thereof include a C1 to C6 alkyl group and a C1 to C6 alkoxy group.

Examples of the C6 to C20 aromatic organic group include a phenyl group, a benzyl group, a benzoyl group, and a p-methoxybenzyl group. Examples of the C5 to C20 alicyclic group include a cyclopentyl group, a cyclohexyl group, a cycloheptyl group, a cyclooctyl group, a cyclopentanyl group, and a cyclodecanyl group.

Examples of a substituent of the substituted C6 to C20 aromatic organic group or a substituent of the substituted C5 to C20 alicyclic group include a C1 to C6 alkyl group and a C1 to C6 alkoxy group.

In Formula (i) or (ii), examples of the C1 to C6 alkyl group include a methyl group, an ethyl group, a butyl group, a propyl group, a pentyl group, and a hexyl group, and examples of the C1 to C6 alkoxy group include a methoxy group, an ethoxy group, a butoxy group, and a phenoxy group.

Specific compound names include 2-ethyl-2'-ethoxyoxanilide and dimethyl (p-methoxybenzylidene) malonate.

Specific examples of an ultraviolet absorber having an effect of improvement on light resistance which is used for the polymerization composition for an optical material of the present invention include HOSTAVIN VSU (manufactured by CLARIANT), and HOSTAVIN PR 25 and HOSTAVIN VSU are preferable.

In view of the effect of the present invention, the ultraviolet absorber (E) may be included in the polymerization composition for an optical material, in an amount of 200 to 14,000 ppm, preferably 500 to 14,000 ppm, more preferably 1,000 to 12,000 ppm, and particularly preferably 5,000 to 10,000 ppm.

### [Light stabilizer (F)]

The polymerization composition for an optical material of the present embodiment may further include a light stabilizer (F). By using the light stabilizer (F), light resistance is further improved.

In view of the effect of the present invention, a hindered amine-based light stabilizer is used as the light stabilizer (F).

Specific examples of the hindered amine-based light stabilizer include bis(1,2,2,6,6-pentamethyl-4-piperidine) sebacate, 1-(1,2,2,6,6-pentamethyl-4-piperidinyl) 10-methyl sebacate, bis(1-undecanoxy-2,2,6,6-tetramethyl-4-piperidine) carbonate, bis(2,2,6,6-tetramethyl-1-piperidine-4-oxyl) sebacate, 2,2,6,6-tetramethyl-4-piperidine hexadecanoate, and 2,2,6,6-tetramethyl-4-piperidine octadecanoate, and bis(1,2,2,6,6-pentamethyl-4-piperidine) sebacate, bis(1-undecanoxy-2,2,6,6-tetramethyl-4-piperidine) carbonate, 2,2,6,6-tetramethyl-4-piperidine hexadecanoate, and 2,2,6,6-tetramethyl-4-piperidine octadecanoate are preferable.

Specific examples of the light stabilizer which is effective in improving the light resistance used in the polymerization composition for an optical material of the present embodiment include LA72 (manufactured by ADEKA Corporation), LA81 (manufactured by ADEKA Corporation), and LA402AF(manufactured by ADEKA Corporation).

In view of the effect of the present invention, the light stabilizer (F) is included in the polymerization composition for an optical material in an amount of 500 to 5,000 ppm, preferably 1,000 to 4,000 ppm, and even more preferably 2,500 to 3,500 ppm.

### [Other components]

According to the present embodiment, a polymerization catalyst, an internal release agent, and a resin modifier may be further included, in addition to the above components (A) to (E) and the components (F) which is further preferably used.

Examples of the polymerization catalyst include a tertiary amine compound and an inorganic acid salt or an organic acid salt thereof, a metal compound, quaternary ammonium salt, or organic sulfonic acid.

As the internal release agent, an acidic phosphate ester may be used. Examples of the acidic phosphate ester include phosphoric acid monoester and phosphoric acid diester, and these may be used singly or two or more kinds thereof may be used in a mixture.

Examples of the resin modifier include an episulfide compound, an alcohol compound, an amine compound, an epoxy compound, an organic acid and an anhydride thereof, and an olefin compound including a (meth)acrylate compound.

### <Method of manufacturing polymerizable composition for an optical material>

The polymerizable composition for an optical material according to the present embodiment may be prepared by mixing the polyisocyanate compound (A), the polyol compound (B), the active hydrogen compound (C), the photochromic compound (D), and the ultraviolet absorber (E) .

In a case where the light stabilizer (F) is added, the composition may be prepared by mixing the components (A) to (F).

According to the present embodiment, the lower limit of the functional group equivalent ratio (B/A) of the polyol compound (B) with respect to the polyisocyanate compound (A) is 0.001 or more, preferably 0.010 or more, more preferably 0.015 or more, even more preferably 0.018 or more, particularly preferably 0.020 or more, and an upper limit thereof is 0.060 or less, preferably 0.050 or less, more preferably 0.040 or less, and even more preferably 0.030 or less. The upper limit and the lower limit may be appropriately combined.

The lower limit of the functional group equivalent ratio (C/A) of the active hydrogen compound (C) with respect to the polyisocyanate compound (A) is 0.30 or more, preferably 0.40 or more, more preferably 0.50 or more, even more preferably 0.60 or more, and the upper limit thereof is 0.99 or less, preferably 0.98 or less, more preferably 0.90 or less, and even more preferably 0.80 or less. The upper limit and the lower limit may be appropriately combined.

The equivalent ratios being in these ranges can provide an optical material having a beneficial balance of effects such as a high photochromic performance and excellent mechanical properties that are characteristics of a poly(thio)urethane-based resin.

In the composition, a molar ratio (NCO group/ (OH group+SH group) of NCO groups included in the polyisocyanate compound (A) with respect to a sum of OH groups and SH groups included in the active hydrogen compound (C) and the polyol compound (B)) is generally in the range of 0.8 to 1.2, preferably in the range of 0.85 to 1.15, and even more preferably in the range of 0.9 to 1.1.

In a case where a molar ratio of NCO group/(OH group+SH group) is 0.8 or more, an unreacted OH group or an unreacted SH group does not remain, the composition is sufficiently cured, and a resin having excellent heat resistance, excellent moisture resistance, and excellent light resistance can be obtained. In a case where a ratio of NCO group/(OH group+SH group) is 1.2 or less, an unreacted NCO group does not remain, a resin having excellent heat resistance, excellent moisture resistance, and excellent light resistance can be obtained, it is not required to increase the reaction temperature in order to reduce an unreacted NCO group, there is no defect in coloration and thus the composition is preferable as a resin material.

The photochromic compound (D) can be used in the range of 10 ppm to 5,000 ppm with respect to a total amount of the polyisocyanate compound (A), the polyol compound (B), and the active hydrogen compound (C).

In a case where the polymerizable composition is prepared by mixing the polyisocyanate compound (A), the polyol compound (B), the active hydrogen compound (C), the photochromic compound (D), the ultraviolet absorber (E), the light stabilizer (F) used in a more preferable aspect, and other additives, the temperature is generally equal to or lower than 25°C. In view of the pot life of the polymerizable composition, it is preferable that the temperature is further decreased in some cases. However, in a case where the solubility of the catalyst, the internal release agent, and the additive to the monomer is not satisfactory, it is possible to heat and dissolve the catalyst, the internal release agent, and the additive to the monomer and the resin modifier, in advance.

The mixing order and the mixing method of the respective components in the composition are not particularly limited as long as respective components can be uniformly mixed, and mixing may be performed by a well-known method. Examples of the well-known method include a method of preparing a master batch including a predetermined amount of an additive and dispersing and dissolving the master batch in a solvent.

According to the present embodiment, the method of manufacturing the optical material is not particularly limited. However, examples of the preferable manufacturing method include cast polymerization. First, the polymerizable composition is injected between forming molds held by a gasket or a tape. In this case, depending on the physical properties required for the plastic lens to be obtained, in many cases, a defoaming treatment under reduced pressure, and a filtration treatment under pressurization, depressurization, are preferably performed, if necessary.

The polymerization condition largely differs depending on the composition of the polymerizable composition, the kind and the use amount of the catalyst, and the shape of the mold, and thus the polymerization condition is not limited. However, the polymerization is performed at the temperature of -50°C to 150°C and over 1 to 50 hours. In some cases, it is preferable that the temperature is maintained or is gradually increased in a temperature range of 10°C to 150°C, and the polymerizable composition is cured for 1 to 25 hours.

The optical material may be subjected to a treatment such as annealing, if necessary. With respect to the treatment temperature, the treatment is generally performed at 50°C to 150°C, preferably performed at 90°C to 140°C, and more preferably at 90°C to 130°C.

According to the present embodiment, when the resin is molded, in addition to the above "other components", in the same manner as the well-known molding method, in accordance with the purpose, various additives such as a chain extender, a crosslinking agent, an antioxidant, a blueing agent, an oil soluble dye, a filler, and an adhesiveness improver may be added.

### <Uses>

The polymerizable composition of the present embodiment may be obtained as molded products in various shapes by changing types of the mold for the cast polymerization. The molded product includes a photochromic performance and includes a high refractive index and high transparency, thus can be used in various optical materials such as a plastic lens. Particularly, the molded product can be suitably used as a plastic spectacle lens or a plastic polarized lens.

### [Plastic spectacle lens]

The plastic spectacle lens using the lens substrate comprised of the molded product of the present embodiment may be used by providing a coating layer on one surface or both surfaces thereof.

The plastic spectacle lens of the present embodiment is formed of a lens substrate including the polymerizable composition and a coating layer.

Specific examples of the coating layer include a primer layer, a hard coat layer, an antireflection layer, an anti-fog coating layer, an antifouling layer, and a water repellent layer. These coating layers may be used singly or a plurality of coating layers may be used in multilayers. In a case where coating layers are provided on both the surfaces, the same coating layer may be provided on each surface, or different coating layers may be provided on each surface.

These coating layers may each contain an ultraviolet absorber for the purpose of protecting lenses or eyes from ultraviolet rays, an infrared absorber for the purpose of protecting eyes from infrared rays, contain a light stabilizer and an antioxidant for the purpose of improving the weather fastness of the lens, and contain a dye or a pigment for the purpose of improving the fashionability of the lens, an antistatic agent, and other well-known additives in combination for enhancing the performance of the lens. With respect to the layer to be coated by application, various leveling agents for improving applicability may be used.

The primer layer is generally formed between a hard coat layer described below and the lens. The primer layer is a coating layer intended to improve the adhesiveness between the hard coat layer formed thereon and the lens and the impact resistance can be improved in some cases. Any material can be used as the primer layer as long as the material has high adhesiveness to the obtained lens, but a primer composition including a urethane-based resin, an epoxy-based resin, a polyester-based resin, a melanin-based resin, and polyvinyl acetal as main components is generally used. For the purpose of adjusting the viscosity of the composition, a suitable solvent which does not affect the lens may be used as the primer composition. It is obvious that no solvent may be used.

The primer layer may be formed by any one of a coating method or a dry method. In the case where a coating method is used, a primer layer is formed by applying the primer composition to a lens by a well-known coating method such as spin coating and dip coating and then solidifying the primer composition. In a case where a dry method is used, a primer layer is formed by a well-known dry method such as a CVD method or a vacuum evaporation method. In a case where a primer layer is formed, for the purpose of improving adhesiveness, the surface of the lens may be subjected to pretreatments such as an alkali treatment, a plasma treatment, and an ultraviolet treatment, if necessary.

The hard coat layer is a coating layer intended to provide the lens surface with functions such as scratch resistance, wear resistance, moisture resistance, hot water resistance, heat resistance, and weather fastness.

Generally, for the hard coat layer, a hard coat composition including an organosilicon compound having curability and one or more kinds of oxide fine particles of an element selected from the element group consisting of Si, Al, Sn, Sb, Ta, Ce, La, Fe, Zn, W, Zr, In, and Ti and/or one or more kinds of fine particles formed of a composite oxide of two or more kinds of elements selected from the element group is used.

In addition to the above components, the hard coat composition preferably includes at least any one of amines, amino acids, a metal acetylacetonate complex, organic acid metal salt, perchlorates, a salt of perchloric acids, acids, metal chloride, and a polyfunctional epoxy compound. A suitable solvent that does not affect the lens may be used for the hard coat composition, or no solvent may be used.

The hard coat layer is generally formed by applying the hard coat composition by a well-known coating method such as spin coating and dip coating and curing the hard coat composition. Examples of the curing method include heat curing and a curing method by energy ray irradiation such as an ultraviolet ray or visible light. In order to suppress the generation of interference fringes, it is preferable that the difference in refractive indexes of the hard coat layer and the lens is within a range of ±0.1.

The antireflection layer is generally formed over the hard coat layer, if necessary. The antireflection layer includes an inorganic antireflection layer and an organic antireflection layer. In a case where the antireflection layer is inorganic, inorganic oxide such as SiO₂ or TiO₂ is used, and the antireflection layer is formed by a dry method such as a vacuum deposition method, a sputtering method, an ion plating method, an ion beam assist method, and a CVD method. In a case where the antireflection layer is organic, a composition containing an organosilicon compound and silica-based fine particles having an internal cavity is used, and the antireflection layer is formed by a wet method.

The antireflection layer includes a single layer and a multiple layer. In the case where the antireflection layer is used as a single layer, it is preferable that the refractive index thereof is lower than that of the hard coat layer by at least 0.1 or more. In order to effectively exhibit an antireflection function, it is preferable to use a multilayer antireflection film. In that case, a low refractive index film and a high refractive index film are alternately laminated. In this case, a refractive index difference of the low refractive index film and the high refractive index film is preferably 0.1 or more. Examples of the high refractive index film include a film of ZnO, TiO₂, CeO₂, Sb₂O₅, SnO₂, ZrO₂, and Ta₂O₅, and examples of the low refractive index film include a SiO₂ film.

An anti-fog layer, an antifouling layer, and a water repellent layer may be formed on the antireflection layer, if necessary. With respect to the method of forming an anti-fog layer, an antifouling layer, and a water repellent layer, as long as the method does not give an adverse effect on the antireflection function, the treatment method, and the treatment material, are not particularly limited. Well-known antifogging treatment methods, antifouling treatment methods, water repellent treatment methods, and materials may be used. Examples of the antifogging treatment method and the antifouling treatment method include a method of covering the surface with a surfactant, a method of adding a hydrophilic film to the surface so as to cause the surface to be water absorbent, a method of covering the surface with fine irregularities so as to increase water absorption, a method of causing the surface to be water absorbent by using photocatalytic activity, and a method of preventing adhesion of water droplets by applying a super water repellent treatment. Examples of the water repellent treatment method include a method of forming a water repellent treated layer by applying a fluorine-containing silane compound by vapor deposition or sputtering and a method of dissolving a fluorine-containing silane compound in a solvent and performing coating to form a water repellent treated layer.

### [Plastic polarized lens]

The plastic polarized lens of the present embodiment includes a polarizing film and a substrate layer comprised of a molded product obtained by curing a polymerizable composition for an optical material of the present embodiment, formed over at least one surface of the polarizing film.

The polarizing film according to the present embodiment may be formed of a thermoplastic resin. Examples of the thermoplastic resin include thermoplastic polyester, thermoplastic polycarbonate, thermoplastic polyolefin, and thermoplastic polyimide. In view of water resistance, heat resistance, and form workability, thermoplastic polyester and thermoplastic polycarbonate are preferable, and thermoplastic polyester is more preferable.

Examples of the thermoplastic polyester include polyethylene terephthalate, polyethylene naphthalate, and polybutylene terephthalate. In view of water resistance, heat resistance, and form workability, polyethylene terephthalate is preferable.

Specific examples of the polarizing film include a thermoplastic polyester polarizing film containing a dichroic dye, a polyvinyl alcohol polarizing film containing iodine, and a polyvinyl alcohol polarizing film containing a dichroic dye.

The polarizing film may be used after being dried and stabilized by a heat treatment.

In order to improve the adhesiveness to the acrylic resin, the polarizing film may be used after one kind or two or more kinds of pretreatments selected from a primer coating treatment, a chemical treatment (a chemical treatment such as gas or alkali), a corona discharge treatment, a plasma treatment, an ultraviolet ray irradiation treatment, an electron beam irradiation treatment, a surface roughening treatment, and a flame treatment, may be performed. Among such pretreatments, one kind or two or more kinds selected from a primer coating treatment, a chemical treatment, a corona discharge treatment, and a plasma treatment are particularly preferable.

The plastic polarized lens of the present embodiment can be obtained by providing a substrate layer obtained by curing the polymerizable composition for an optical material of the present embodiment, on at least one surface of such a polarizing film.

The method of manufacturing the plastic polarized lens is not particularly limited. However, preferable examples thereof include a cast polymerization method.

For example, the method of manufacturing the plastic polarized lens of the present embodiment may include
a step of fixing a polarizing film to a lens casting mold in a state of being separated from molds;
a step of injecting the polymerizable composition for an optical material to at least one of the cavities formed between the polarizing film and the molds; and
a step of polymerizing and curing the polymerizable composition for an optical material and laminating a substrate layer on at least one surface of the polarizing film.

The lens casting mold is generally constituted of two substantially disc-shaped glass molds held by a gasket. The polarizing film is mounted in the cavity of this lens casting mold so as to be parallel to the inner surface of the mold on the front side where the film surface faces. Cavities are formed between the polarizing film and the molds. The polarizing film may be shaped in advance.

The polymerization condition of the polymerizable composition for an optical material differs depending on the composition of the polymerizable composition, the types and the use amount of the catalyst, and the shape of the mold, but the polymerization is performed at the temperature of 5°C to 140°C for 1 to 50 hours. In some cases, it is preferable that the temperature is maintained or is gradually increased in a temperature range of 5°C to 130°C, and the polymerizable composition is cured for 1 to 25 hours.

The laminate cured by polymerization is released from the casting mold, so as to obtain a plastic polarized lens of the present embodiment.

According to the present embodiment, the laminate after polymerization and release may be subjected to a heating treatment such as annealing. With respect to the treatment temperature, in view of the effects of the present invention, the treatment is performed at 90°C to 150°C, is preferably performed at 110°C to 130°C, and more preferably performed at 115°C to 125°C. In view of the effect of the present invention, the treatment time is in the range of 1 to 10 hours and preferably 2 to 5 hours.

The coating layer which is the same as that of the plastic spectacle lens may be formed on the surface of the obtained substrate layer.

### Examples

Subsequently, the present invention is specifically described with reference to the examples. However, the present invention is not limited to the examples. With respect to the examples and the comparative examples, methods and devices used in evaluations are as follows.

Hereinafter, the present invention is specifically described with reference to examples.

In the performance test of the resin, transparency, refractive index, an Abbe number, and light resistance were evaluated by the following method.
- Transparency: Irradiation was performed on the obtained resin molded product using the projector in a dark place, and whether there are cloudiness, an opaque material, and elution of an adhesive component from a tape was visually determined. A case where cloudiness, opaque material, and elution from a tape were not found is referred to as "existence" (existence of transparency) and a case where cloudiness, an opaque material, and elution from a tape were found is referred to as "non-existence" (non-existence of transparency).
- Refractive index (ne) Abbe number (ve): Measurement was performed at 20°C by using a Pulfrich refractometer

### 1. Evaluation of photochromic performance (Light transmittance change amount before and after color development (ΔT%max)) :

In a case where a color of a sample of the molded product processed to a thickness of 2.0 mm was developed for five minutes by using a light source device of a xenon lamp (180 W) at a temperature of 23°C under condition of the ultraviolet intensity of 50,000 Lux (lx) measured with an integral light counter, spectroscopy before and after the color development was measured in a photometry system and a light transmittance change amount was obtained in the following equation.

Light transmittance change amount before and after the color development (ΔT%max) = light transmittance (T%max) at maximum absorption wavelength (λmax) during the color development - light transmittance (T%0) at maximum absorption wavelength (λmax) before the color development

The greater the change amount of the light transmittance is the brighter the sample during the color fading is and the higher the light shielding property during the color development is, and thus the higher the photochromic performance is.
- Light source: MS-35AAF/FB manufactured by Ushio Inc.
- Instant multi-photometry system: MSPD-7700 manufactured by Otsuka Electronics Co., Ltd.

### 2. light resistance test (Accelerated test)

A QUV test (light source: UVA-340, intensity: 0.50 W/m², test condition: 50°Cx150 hours) was performed with an accelerated weather fastness tester manufactured by Q-Lab Corporation by using a flat sheet having a thickness of 2 mm, and light resistance was evaluated based on change amounts of light transmittance before and after irradiation.
(a) The difference between change amounts of light transmittance before and after light resistance test at 550 nm was calculated by formula "change amount (ΔT%) of light transmittance before light resistance test at 550 nm - change amount (ΔT%) of light transmittance after light resistance test at 550 nm (A result is shown as "550 nm (ΔT%) " in Table 1.)", so as to evaluate light resistance (stability of a photochromic performance) from the change of the photochromic performance.
(b) A yellowing degree of a resin was calculated by formula "change amount (ΔT%) of light transmittance before light resistance test at 440 nm - change amount (ΔT%) of light transmittance after light resistance test at 440 nm (A result is shown as "440 nm (ΔT%)" in Table 1.)" so as to evaluate light resistance.

### Raw material used

### (Ultraviolet absorber)

- Hostavin PR 25 (Trade name, manufactured by CLARIANT): Dimethyl (p-methoxybenzylidene) malonate
- Hostavin VSU (Trade name, manufactured by CLARIANT): 2-Ethyl-2'-ethoxyoxanilide
- Seesorb 107 (Trade name, manufactured by Shipro Kasei Kaisha Ltd.): 2,2'-Dihydroxy-4,4'-dimethoxybenzophenone
- Viosorb 583 (Trade name, manufactured by Kyodo Chemical Co., Ltd.): 2-(2-Hydroxy-5-tert-octylphenyl) benzotriazole
- Tinuvin 405 (Trade name, manufactured by BASF SE): 2-[4-[(2-hydroxy-3-(2'-ethyl)hexyl)oxy]-2-hydroxyphenyl]-4,6-bis (2,4-dimethylphenyl)-1,3,5-triazine
- Tinuvin PS (Trade name, manufactured by BASF SE): 2-(2-hydroxy-5-t-butylphenyl) benzotriazole

### (Photochromic compound)

- Reversacol Trent Blue (a polydimethylsiloxane chain, a naphthopyran-based chromophore (Formula 3))
- Reversacol Heath Green (a polyoxyalkylene chain, a naphthopyran-based chromophore (Formula 3))
- Reversacol Wembley Grey (a polyoxyalkylene chain, a naphthopyran-based chromophore (Formula 3))
- Reversacol Chilli Red (a polydimethylsiloxane chain, a naphthopyran-based chromophore (Formula 3))
- Cayenne Red (a polyoxyalkylene chain, a naphthopyran-based chromophore (Formula 3))

### (Light stabilizer)

- LA72 (Trade name, manufactured by ADEKA Corporation) : Hindered amine-based light stabilizer

### [Example 1]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 5,000 ppm of an ultraviolet absorber HOSTAVIN PR 25 were added, and mixed and stirred to be dissolved. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 59.2%. The same measurement was further performed after a light resistance test was performed with an ultraviolet irradiator. The difference between change amounts (ΔT%max) of light transmittance before and after the color development at the maximum absorption wavelength (λmax: 550 nm) was 15.8%, satisfactory light control performances were maintained even after the light resistance test. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 11.5%, and the decrease of the absorption intensity was suppressed. The compositions are presented in Table-1, and a measurement result of physical properties is presented in Table-2.

### [Example 2]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 10,000 ppm of an ultraviolet absorber HOSTAVIN PR 25 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, and a change amount (ΔT%max) of light transmittance before and after the color development at the maximum absorption wavelength (λmax: 550 nm) was 58.4%. The same measurement was further performed after a light resistance test was performed with an ultraviolet irradiator. It was indicated that the difference between change amounts (ΔT%max) of light transmittance before and after the color development at the maximum absorption wavelength (λmax: 550 nm) was 13.3%, satisfactory light control performances were maintained even after the light resistance test. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 7.9%, and the decrease of the absorption intensity was suppressed. The compositions are presented in Table-1, and a measurement result of physical properties is presented in Table-2.

### [Example 3]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 5,000 ppm of an ultraviolet absorber HOSTAVIN VSU were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 60.4%. The same measurement was further performed after a light resistance test was performed with an ultraviolet irradiator. It was indicated that the difference between change amounts (ΔT%max)of light transmittance before and after the color development at the maximum absorption wavelength (λmax: 550 nm) was 16.3%, satisfactory light control performances were maintained even after the light resistance test. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 12.3%, and the decrease of the absorption intensity was suppressed. The compositions are presented in Table-1, and a measurement result of physical properties is presented in Table-2.

### [Example 4]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 10,000 ppm of an ultraviolet absorber HOSTAVIN VSU were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 60.9%. The same measurement was further performed after a light resistance test was performed with an ultraviolet irradiator. It was indicated that the difference between change amounts (ΔT%max) of light transmittance before and after the color development at the maximum absorption wavelength (λmax: 550 nm) was 10.0%, satisfactory light control performances were maintained even after the light resistance test. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 5.9%, and the decrease of the absorption intensity was suppressed. The compositions are presented in Table-1, and a measurement result of physical properties is presented in Table-2.

### [Example 5]

570 ppm of Reversacol Wembley Grey (manufactured by Vivimed Labs Ltd.) and 310 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 5,000 ppm of an ultraviolet absorber HOSTAVIN PR 25 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 68.5%. The same measurement was further performed after a light resistance test was performed with an ultraviolet irradiator. It was indicated that the difference between change amounts (ΔT%max) of light transmittance before and after the color development at the maximum absorption wavelength (λmax: 550 nm) was 11.7%, satisfactory light control performances were maintained even after the light resistance test. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 11.8%, and the decrease of the absorption intensity was suppressed. The compositions are presented in Table-1, and a measurement result of physical properties is presented in Table-2.

### [Example 6]

570 ppm of Reversacol Wembley Grey (manufactured by Vivimed Labs Ltd.) and 310 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 10,000 ppm of an ultraviolet absorber HOSTAVIN PR 25 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 67.3%. The same measurement was further performed after a light resistance test was performed with an ultraviolet irradiator. It was indicated that the difference between change amounts (ΔT%max)of light transmittance before and after the color development at the maximum absorption wavelength (λmax: 550 nm) was 8.9%, satisfactory light control performances were maintained even after the light resistance test. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 7.7%, and the decrease of the absorption intensity was suppressed. The compositions are presented in Table-1, and a measurement result of physical properties is presented in Table-2.

### [Example 7]

570 ppm of Reversacol Wembley Grey (manufactured by Vivimed Labs Ltd.) and 310 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 5,000 ppm of an ultraviolet absorber HOSTAVIN VSU were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 67.7%. The same measurement was further performed after a light resistance test was performed with an ultraviolet irradiator. It was indicated that the difference between change amounts (ΔT%max) of light transmittance before and after the color development at the maximum absorption wavelength (λmax: 550 nm) was 11.3%, satisfactory light control performances were maintained even after the light resistance test. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 12.2%, and the decrease of the absorption intensity was suppressed. The compositions are presented in Table-1, and a measurement result of physical properties is presented in Table-2.

### [Example 8]

570 ppm of Reversacol Wembley Grey (manufactured by Vivimed Labs Ltd.) and 310 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 10,000 ppm of an ultraviolet absorber HOSTAVIN VSU were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 66.9%. The same measurement was further performed after a light resistance test was performed with an ultraviolet irradiator. It was indicated that the difference between change amounts (ΔT%max) of light transmittance before and after the color development at the maximum absorption wavelength (λmax: 550 nm) was 8.5%, satisfactory light control performances were maintained even after the light resistance test. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 8.1%, and the decrease of the absorption intensity was suppressed. The compositions are presented in Table-1, and a measurement result of physical properties is presented in Table-2.

### [Example 9]

350 ppm of Reversacol Chilli Red (manufactured by Vivimed Labs Ltd.) and 550 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 10,000 ppm of an ultraviolet absorber HOSTAVIN PR 25 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 49.6%. The same measurement was further performed after a light resistance test was performed with an ultraviolet irradiator. It was indicated that the difference between change amounts (ΔT%max) of light transmittance before and after the color development at the maximum absorption wavelength (λmax: 550 nm) was 9.6%, satisfactory light control performances were maintained even after the light resistance test. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 8.5%, and the decrease of the absorption intensity was suppressed. The compositions are presented in Table-1, and a measurement result of physical properties is presented in Table-2.

### [Example 10]

350 ppm of Reversacol Chilli Red (manufactured by Vivimed Labs Ltd.) and 550 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 10,000 ppm of an ultraviolet absorber HOSTAVIN VSU were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, mixing and stirring were continued, then degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 52.7%. The same measurement was further performed after a light resistance test was performed with an ultraviolet irradiator. It was indicated that the difference between change amounts (ΔT%max)of light transmittance before and after the color development at the maximum absorption wavelength (λmax: 550 nm) was 11.5%, satisfactory light control performances were maintained even after the light resistance test. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 9.9%, and the decrease of the absorption intensity was suppressed. The compositions are presented in Table-1, and a measurement result of physical properties is presented in Table-2.

### Comparative

### [Example 11]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 200 ppm of an ultraviolet absorber Seesorb 107 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, and a change amount (ΔT%max) of light transmittance before and after the color development at the maximum absorption wavelength (λmax: 550 nm) was 55.8%. The same measurement was further performed after a light resistance test was performed with an ultraviolet irradiator. The difference between change amounts (ΔT%max)of light transmittance before and after the color development at the maximum absorption wavelength (λmax: 550 nm) was 14.8%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 5.2% and reduction of yellowing was acknowledged. The compositions are presented in Table-1, and a measurement result of physical properties is presented in Table-2.

### Comparative

### [Example 12]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 500 ppm of an ultraviolet absorber Seesorb 107 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30 °C to 120 °C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, it resulted that a change amount (ΔT%max) of light transmittance before and after the color development at the maximum absorption wavelength (λmax: 550 nm) was 49.3% and the change amount of light transmittance was inferior compared with [Comparative Example 11]. The same measurement was further performed after a light resistance test was performed with an ultraviolet irradiator. The change amount (ΔT%max) of the light transmittance before and after the color development at the maximum absorption wavelength (λmax: 550 nm) was decreased by 13.0% to 36.3%, and improvement of light resistance was recognized compared with [Comparative Example 11]. As a yellowing evaluation of a resin, change amounts (ΔT%) of light transmittance before and after the light resistance test was performed with the ultraviolet irradiator at an absorption wavelength of 440 nm in a stage before the color development were compared. As a result, the change amount (ΔT%) of light transmittance was decreased by 4.6% from 79.5% to 74.9%. However, reduction of yellowing was acknowledged compared with [Comparative Example 11]. The compositions are presented in Table-1, and a measurement result of physical properties is presented in Table-2.

### Comparative

### [Example 13]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 1, 000 ppm of an ultraviolet absorber Seesorb 107 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30 °C to 120 °C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, it resulted that a change amount (ΔT%max) of light transmittance before and after the color development at the maximum absorption wavelength (λmax: 550 nm) was 41.9% and the change amount of light transmittance was inferior compared with [Comparative Example 12]. The same measurement was further performed after a light resistance test was performed with an ultraviolet irradiator. The change amount (ΔT%max) of light transmittance before and after the color development at the maximum absorption wavelength (λmax: 550 nm) was decreased by 10.9% to 31.0%, and improvement of light resistance was recognized compared with [Comparative Example 12]. As a yellowing evaluation of a resin, change amounts (ΔT%) of light transmittance before and after the light resistance test was performed with the ultraviolet irradiator at an absorption wavelength of 440 nm in a stage before the color development were compared. As a result, the change amount was decreased by 4.1% from 77.4% to 73.3%. However, reduction of yellowing was acknowledged compared with [Comparative Example 12]. The compositions are presented in Table-1, and a measurement result of physical properties is presented in Table-2.

### Comparative [Example 14]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 2,000 ppm of an ultraviolet absorber Seesorb 107 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, a change amount (ΔT%max)of light transmittance before and after the color development at the maximum absorption wavelength (λmax: 550 nm) was 34.1%, and it resulted that the change amount of light transmittance was inferior. The same measurement was further performed after a light resistance test was performed with an ultraviolet irradiator. The difference between change amounts (ΔT%max) of light transmittance before and after the color development at the maximum absorption wavelength (λmax: 550 nm) was 10.3%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 3.5%, and reduction of yellowing was acknowledged. The compositions are presented in Table-1, and a measurement result of physical properties is presented in Table-2.

### Comparative

### [Example 15]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 500 ppm of an ultraviolet absorber Viosorb 583 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30 °C to 120 °C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, a change amount (ΔT%max)of light transmittance before and after the color development at the maximum absorption wavelength (λmax: 550 nm) was 45.8%, and it resulted that the change amount of light transmittance was inferior. The same measurement was further performed after a light resistance test was performed with an ultraviolet irradiator. The difference between change amounts (ΔT%max)of light transmittance before and after the color development at the maximum absorption wavelength (λmax: 550 nm) was 12.2%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 14.8%, and reduction of yellowing was acknowledged. The compositions are presented in Table-1, and a measurement result of physical properties is presented in Table-2.

### Comparative

### [Example 16]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 1,000 ppm of an ultraviolet absorber Viosorb 583 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, it resulted that a change amount (ΔT%max) of light transmittance before and after the color development at the maximum absorption wavelength (λmax: 550 nm) was 42.7% and the change amount of light transmittance was inferior compared with [Comparative Example 15]. The same measurement was further performed after a light resistance test was performed with an ultraviolet irradiator. The change amount (ΔT%max) of light transmittance before and after the color development at the maximum absorption wavelength (λmax: 550 nm) was decreased by 8.9% to 33.8%, and improvement of light resistance was recognized compared with [Comparative Example 15]. As a yellowing evaluation of a resin, change amounts (ΔT%) of light transmittance before and after the light resistance test was performed with the ultraviolet irradiator at an absorption wavelength of 440 nm in a stage before the color development were compared. As a result, the change amount was decreased by 12.4% from 78.7% to 66.3%. However, reduction of yellowing was acknowledged compared with [Comparative Example 15]. The compositions are presented in Table-1, and a measurement result of physical properties is presented in Table-2.

### Comparative

### [Example 17]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 2,500 ppm of an ultraviolet absorber Viosorb 583 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, it resulted that a change amount (ΔT%max) of light transmittance before and after the color development at the maximum absorption wavelength (λmax: 550 nm) was 38.1% and the change amount of light transmittance was inferior compared with [Comparative Example 16]. The same measurement was further performed after a light resistance test was performed with an ultraviolet irradiator. The change amount (ΔT%max) of light transmittance before and after the color development at the maximum absorption wavelength (λmax: 550 nm) was decreased by 3.7% to 34.4%, and improvement of light resistance was recognized compared with [Comparative Example 16]. As a yellowing evaluation of a resin, change amounts (ΔT%) of light transmittance before and after the light resistance test was performed with the ultraviolet irradiator at an absorption wavelength of 440 nm in a stage before the color development were compared. As a result, the change amount was decreased by 8.2% from 79.1% to 70.9%. However, reduction of yellowing was acknowledged compared with [Comparative Example 16]. The compositions are presented in Table-1, and a measurement result of physical properties is presented in Table-2.

### Comparative

### [Example 18]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 5, 000 ppm of an ultraviolet absorber Viosorb 583 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, a change amount (ΔT%max) of light transmittance before and after the color development at the maximum absorption wavelength (λmax: 550 nm) was 37.0%, and it resulted that the change amount of light transmittance was inferior. The same measurement was further performed after a light resistance test was performed with an ultraviolet irradiator. The difference between change amounts (ΔT%max) of light transmittance before and after the color development at the maximum absorption wavelength (λmax: 550 nm) was 2.1%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 5.1%, and reduction of yellowing was acknowledged. The compositions are presented in Table-1, and a measurement result of physical properties is presented in Table-2.

### Comparative

### [Example 19]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 500 ppm of an ultraviolet absorber TINUVIN 405 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, a change amount (ΔT%max) of light transmittance before and after the color development at the maximum absorption wavelength (λmax: 550 nm) was 53.2%, and it resulted that the change amount of light transmittance was inferior. The same measurement was further performed after a light resistance test was performed with an ultraviolet irradiator. The difference between change amounts (ΔT%max) of light transmittance before and after the color development at the maximum absorption wavelength (λmax: 550 nm) was 17.8%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 13.8%, and reduction of yellowing was acknowledged. The compositions are presented in Table-1, and a measurement result of physical properties is presented in Table-2.

### Comparative

### [Example 20]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 1, 000 ppm of an ultraviolet absorber TINUVIN 405 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, and a change amount (ΔT%max) of light transmittance before and after the color development at the maximum absorption wavelength (λmax: 550 nm) was 53.1%. The same measurement was further performed after a light resistance test was performed with an ultraviolet irradiator. The change amount (ΔT%max) of light transmittance before and after the color development at the maximum absorption wavelength (λmax: 550 nm) was decreased by 15.6% to 37.5%, and improvement of light resistance was recognized compared with [Comparative Example 19]. As a yellowing evaluation of a resin, change amounts (ΔT%) of light transmittance before and after the light resistance test was performed with the ultraviolet irradiator at an absorption wavelength of 440 nm in a stage before the color development were compared. As a result, the change amount was decreased by 10.9% from 77.7% to 66.8%. However, reduction of yellowing was acknowledged compared with [Comparative Example 19] . The compositions are presented in Table-1, and a measurement result of physical properties is presented in Table-2.

### Comparative

### [Example 21]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 2, 500 ppm of an ultraviolet absorber TINUVIN 405 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30 °C to 120 °C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, it resulted that a change amount (ΔT%max) of light transmittance before and after the color development at the maximum absorption wavelength (λmax: 550 nm) was 50.0% and the change amount of light transmittance was inferior compared with [Comparative Example 19]. The same measurement was further performed after a light resistance test was performed with an ultraviolet irradiator. The change amount (ΔT%max) of light transmittance before and after the color development at the maximum absorption wavelength (λmax: 550 nm) was decreased by 13.3% to 36.7%, and improvement of light resistance was recognized compared with [Comparative Example 19]. As a yellowing evaluation of a resin, change amounts (ΔT%) of light transmittance before and after the light resistance test was performed with the ultraviolet irradiator at an absorption wavelength of 440 nm in a stage before the color development were compared. As a result, the change amount was decreased by 8.1% from 77.9% to 69.8%. However, reduction of yellowing was acknowledged compared with [Comparative Example 19]. The compositions are presented in Table-1, and a measurement result of physical properties is presented in Table-2.

### Comparative

### [Example 22]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 5,000 ppm of an ultraviolet absorber TINUVIN 405 were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, a change amount (ΔT%max) of light transmittance before and after the color development at the maximum absorption wavelength (λmax: 550 nm) was 49.7%, and it resulted that the change amount of light transmittance was inferior. The same measurement was further performed after a light resistance test was performed with an ultraviolet irradiator. The difference between change amounts (ΔT%max) of light transmittance before and after the color development at the maximum absorption wavelength (λmax: 550 nm) was 11.5%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 5.1%, and reduction of yellowing was acknowledged. The compositions are presented in Table-1, and a measurement result of physical properties is presented in Table-2.

### Comparative

### [Example 23]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 500 ppm of an ultraviolet absorber TINUVIN PS were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, a change amount (ΔT%max) of light transmittance before and after the color development at the maximum absorption wavelength (λmax: 550 nm) was 49.9%, and it resulted that the change amount of light transmittance was inferior. The same measurement was further performed after a light resistance test was performed with an ultraviolet irradiator. The difference between change amounts (ΔT%max) of light transmittance before and after the color development at the maximum absorption wavelength (λmax: 550 nm) was 14.3%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 16.6%, and reduction of yellowing was acknowledged. The compositions are presented in Table-1, and a measurement result of physical properties is presented in Table-2.

### Comparative

### [Example 24]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 1, 000 ppm of an ultraviolet absorber TINUVIN PS were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30 °C to 120 °C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, it resulted that a change amount (ΔT%max) of light transmittance before and after the color development at the maximum absorption wavelength (λmax: 550 nm) was 49.1% and the change amount of light transmittance was inferior compared with [Comparative Example 23]. The same measurement was further performed after a light resistance test was performed with an ultraviolet irradiator. The change amount (ΔT%max) of light transmittance before and after the color development at the maximum absorption wavelength (λmax: 550 nm) was decreased by 11.3% to 37.8%, and improvement of light resistance was recognized compared with [Comparative Example 23]. As a yellowing evaluation of a resin, change amounts (ΔT%) of light transmittance before and after the light resistance test was performed with the ultraviolet irradiator at an absorption wavelength of 440 nm in a stage before the color development were compared. As a result, the change amount was decreased by 13.2% from 82.2% to 69.0%. However, reduction of yellowing was acknowledged compared with [Comparative Example 23]. The compositions are presented in Table-1, and a measurement result of physical properties is presented in Table-2.

### [Comparative Example 25]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 2,500 ppm of an ultraviolet absorber TINUVIN PS were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, it resulted that a change amount (ΔT%max) of light transmittance before and after the color development at the maximum absorption wavelength (λmax: 550 nm) was 46.8% and the change amount of light transmittance was inferior compared with [Comparative Example 24]. The same measurement was further performed after a light resistance test was performed with an ultraviolet irradiator. The change amount (ΔT%max) of light transmittance before and after the color development at the maximum absorption wavelength (λmax: 550 nm) was decreased by 8.6% to 38.2%, and improvement of light resistance was recognized compared with [Comparative Example 24]. As a yellowing evaluation of a resin, change amounts (ΔT%) of light transmittance before and after the light resistance test was performed with the ultraviolet irradiator at an absorption wavelength of 440 nm in a stage before the color development were compared. As a result, the change amount was decreased by 12.1% from 82.4% to 70.3%. However, reduction of yellowing was acknowledged compared with [Comparative Example 24]. The compositions are presented in Table-1, and a measurement result of physical properties is presented in Table-2.

### Comparative

### [Example 26]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 5, 000 ppm of an ultraviolet absorber TINUVIN PS were added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. In a case where the light control performance of the molded product was evaluated, a change amount (ΔT%max) of light transmittance before and after the color development at the maximum absorption wavelength (λmax: 550 nm) was 43.9%, and it resulted that the change amount of light transmittance was inferior. The same measurement was further performed after a light resistance test was performed with an ultraviolet irradiator. The difference between change amounts (ΔT%max) of light transmittance before and after the color development at the maximum absorption wavelength (λmax: 550 nm) was 5.6%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 8.5%, and reduction of yellowing was acknowledged. The compositions are presented in Table-1, and a measurement result of physical properties is presented in Table-2.

### [Example 27]

570 ppm of Reversacol Wembley Grey (manufactured by Vivimed Labs Ltd.) and 310 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 10,000 ppm of an ultraviolet absorber HOSTAVIN PR 25 were added, and 3,000 ppm of a light stabilizer LA72 was added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 64.9%. The same measurement was further performed after a light resistance test was performed with an ultraviolet irradiator. The difference between change amounts (ΔT%max) of light transmittance before and after the color development at the maximum absorption wavelength (λmax: 550 nm) was 2.1%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 12.1%, and reduction of yellowing was not acknowledged. The compositions are presented in Table-1, and a measurement result of physical properties is presented in Table-2.

### [Example 28]

430 ppm of Cayenne Red (manufactured by Vivimed Labs Ltd.) and 980 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent, and 10,000 ppm of an ultraviolet absorber HOSTAVIN PR 25 were added, and 3000 ppm of a light stabilizer LA72 was added, and mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 54.1%. The same measurement was further performed after a light resistance test was performed with an ultraviolet irradiator. The difference between change amounts (ΔT%max) of light transmittance before and after the color development at the maximum absorption wavelength (λmax: 550 nm) was 4.2%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 15.8%, and reduction of yellowing was not acknowledged. The compositions are presented in Table-1, and a measurement result of physical properties is presented in Table-2.

### [Example 29]

684 ppm of Reversacol Wembley Grey (manufactured by Vivimed Labs Ltd.) and 372 ppm of Reversacol Heath Green (manufactured by Vivimed Labs Ltd.) as photochromic compound were added to 48.7 pbw of a composition including 2,5-bis(isocyanatomethyl) bicyclo-[2.2.1]-heptane and 2,6-bis(isocyanatomethyl) bicyclo-[2.2.1]-heptane, 600 ppm of dimethyltin dichloride and 10,000 ppm of an ultraviolet absorber HOSTAVIN PR 25, and 2,500 ppm of butoxyethyl acid phosphate as an internal release agent were each added, and mixing and stirring were performed for dissolution. 5.9 pbw of polypropylene glycol (diol type) having a number average molecular weight of 1,250, 30.0 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane, and 15.4 pbw of a composition including pentaerythritol tetrakis(2-mercaptoacetate) and pentaerythritol tetrakis (3-mercaptopropionate) were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 65.7%. The same measurement was further performed after a light resistance test was performed with an ultraviolet irradiator. The difference between change amounts (ΔT%max) of light transmittance before and after the color development at the maximum absorption wavelength (λmax: 550 nm) was 1.1%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 6.1%, and reduction of yellowing was acknowledged. The compositions are presented in Table-1, and a measurement result of physical properties is presented in Table-2.

### [Example 30]

684 ppm of Reversacol Wembley Grey (manufactured by Vivimed Labs Ltd.) and 372 ppm of Reversacol Heath Green (manufactured by Vivimed Labs Ltd.) as photochromic compound were added to 47.2 pbw of a composition including dicyclohexylmethane-4,4'-diisocyanate and dicyclohexylmethane-2,4'-diisocyanate and 7.6 pbw of hexamethylene diisocyanate, 600 ppm of dimethyltin dichloride, 10,000 ppm of an ultraviolet absorber HOSTAVIN PR 25, and 2,500 ppm of butoxyethyl acid phosphate as an internal release agent were each added, and mixing and stirring were performed for dissolution. 5.6 pbw of polypropylene glycol (diol type) having a number average molecular weight of 1250 and 39.6 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 62.7%. The same measurement was further performed after a light resistance test was performed with an ultraviolet irradiator. The difference between change amounts (ΔT%max) of light transmittance before and after the color development at the maximum absorption wavelength (λmax: 550 nm) was 1.2%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 11.7%, and reduction of yellowing was acknowledged. The compositions are presented in Table-1, and a measurement result of physical properties is presented in Table-2.

### [Example 31]

684 ppm of Reversacol Wembley Grey (manufactured by Vivimed Labs Ltd.) and 372 ppm of Reversacol Heath Green (manufactured by Vivimed Labs Ltd.) as photochromic compound were added to 50.9 pbw of m-xylylene diisocyanate, 600 ppm of dimethyltin dichloride and 10, 000 ppm of an ultraviolet absorber HOSTAVIN PR 25, and 2,500 ppm of butoxyethyl acid phosphate as an internal release agent were each added, and mixing and stirring were performed for dissolution. 6.3 pbw of polypropylene glycol (diol type) having a number average molecular weight of 1250 and 42.8 pbw of a composition including 1,2-bis(mercaptomethylthio) ethane, 1,2-bis(2-mercaptoethylthio) ethane, and 1,2-bis(3-mercaptopropylthio) ethane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 69.1%. The same measurement was further performed after a light resistance test was performed with an ultraviolet irradiator. The difference between change amounts (ΔT%max) of light transmittance before and after the color development at the maximum absorption wavelength (λmax: 550 nm) was 1.2%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 5.0%, and reduction of yellowing was acknowledged. The compositions are presented in Table-1, and a measurement result of physical properties is presented in Table-2.

### [Example 32]

684 ppm of Reversacol Wembley Grey (manufactured by Vivimed Labs Ltd.) and 372 ppm of Reversacol Heath Green (manufactured by Vivimed Labs Ltd.) as photochromic compound were added to 50.9 pbw of p-xylylene diisocyanate, 600 ppm of dimethyltin dichloride and 10, 000 ppm of an ultraviolet absorber HOSTAVIN PR 25, and 2,500 ppm of butoxyethyl acid phosphate as an internal release agent were each added, and mixing and stirring were performed for dissolution. 6.3 pbw of polypropylene glycol (diol type) having a number average molecular weight of 1250 and 42.8 pbw of a composition including 1,2-bis(mercaptomethylthio) ethane, 1,2-bis(2-mercaptoethylthio) ethane, and 1,2-bis(3-mercaptopropylthio) ethane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 68.6%. The same measurement was further performed after a light resistance test was performed with an ultraviolet irradiator. The difference between change amounts (ΔT%max) of light transmittance before and after the color development at the maximum absorption wavelength (λmax: 550 nm) was 0.8%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 3.8%, and reduction of yellowing was acknowledged. The compositions are presented in Table-1, and a measurement result of physical properties is presented in Table-2.

### [Example 33]

570 ppm of Reversacol Wembley Grey (manufactured by Vivimed Labs Ltd.) and 310 ppm of Reversacol Heath Green (manufactured by Vivimed Labs Ltd.) as photochromic compound were added to 50.2 pbw of a composition including 2,5-bis(isocyanatomethyl) bicyclo-[2.2.1]-heptane and 2,6-bis(isocyanatomethyl) bicyclo-[2.2.1]-heptane, 600 ppm of dimethyltin dichloride and 10,000 ppm of an ultraviolet absorber HOSTAVIN PR 25, and 2,500 ppm of butoxyethyl acid phosphate as an internal release agent were each added, and mixing and stirring were performed for dissolution. 13.9 pbw of polypropylene glycol (diol type) having a number average molecular weight of 1000 and 35.9 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 70.0%. The same measurement was further performed after a light resistance test was performed with an ultraviolet irradiator. The difference between change amounts (ΔT%max) of light transmittance before and after the color development at the maximum absorption wavelength (λmax: 550 nm) was 2.1%, and improvement of light resistance was recognized. As a yellowing evaluation of a resin, change amounts (ΔT%) of light transmittance before and after the light resistance test was performed with the ultraviolet irradiator at an absorption wavelength of 440 nm in a stage before the color development were compared. As a result, the difference between the change amounts was 6.5%, and reduction of yellowing was acknowledged. The compositions are presented in Table-1, and a measurement result of physical properties is presented in Table-2.

### [Example 34]

570 ppm of Reversacol Wembley Grey (manufactured by Vivimed Labs Ltd.) and 310 ppm of Reversacol Heath Green (manufactured by Vivimed Labs Ltd.) as photochromic compound were added to 49.2 pbw of a composition including 2,5-bis(isocyanatomethyl) bicyclo-[2.2.1]-heptane and 2,6-bis(isocyanatomethyl) bicyclo-[2.2.1]-heptane, 600 ppm of dimethyltin dichloride and 10,000 ppm of an ultraviolet absorber HOSTAVIN PR 25, and 2,500 ppm of butoxyethyl acid phosphate as an internal release agent were each added, and mixing and stirring were performed for dissolution. 13.7 pbw of polypropylene glycol (triol type) having a number average molecular weight of 1,500 and 37.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 67.1%. The same measurement was further performed after a light resistance test was performed with an ultraviolet irradiator. The difference between change amounts (ΔT%max) of light transmittance before and after the color development at the maximum absorption wavelength (λmax: 550 nm) was 2.9%, and improvement of light resistance was recognized. As a yellowing evaluation of a resin, change amounts (ΔT%) of light transmittance before and after the light resistance test was performed by the ultraviolet irradiator at an absorption wavelength of 440 nm in a stage before the color development were compared. As a result, the difference between the change amounts was 9.5%, and reduction of yellowing was acknowledged. The compositions are presented in Table-1, and a measurement result of physical properties is presented in Table-2.

### [Comparative Example 1]

570 ppm of Reversacol Trent Blue (manufactured by Vivimed Labs Ltd.) and 300 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent were mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 59.7%. The same measurement was further performed after a light resistance test was performed with an ultraviolet irradiator. The difference between change amounts (ΔT%max) of light transmittance before and after the color development in the maximum absorption wavelength (λmax: 550 nm) was 26.7%, and it was indicated that the change amount of light transmittance before and after the color development was decreased after the light resistance test. As a yellowing evaluation of the resin, change amounts (ΔT%) of light transmittance before and after the light resistance test was performed by an ultraviolet irradiator at an absorption wavelength of 440 nm in a stage before the color development were compared. As a result, the difference between the change amounts was 29.2%, which is greatly decreased. The compositions are presented in Table-1, and a measurement result of physical properties is presented in Table-2.

### [Comparative Example 2]

350 ppm of Reversacol Chilli Red (manufactured by Vivimed Labs Ltd.) and 550 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent were mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 49.6%. The same measurement was further performed after a light resistance test was performed with an ultraviolet irradiator. The difference between change amounts (ΔT%max) of light transmittance before and after the color development in the maximum absorption wavelength (λmax: 550 nm) was 31.1%, and it was indicated that the change amount of light transmittance before and after the color development was decreased after the light resistance test. As a yellowing evaluation of the resin, change amounts (ΔT%) of light transmittance before and after the light resistance test was performed with an ultraviolet irradiator at an absorption wavelength of 440 nm in a stage before the color development were compared. As a result, the difference between the change amounts was 27.5%, which is greatly decreased. The compositions are presented in Table-1, and a measurement result of physical properties is presented in Table-2.

### [Comparative Example 3]

570 ppm of Reversacol Wembley Grey (manufactured by Vivimed Labs Ltd.) and 310 ppm of Reversacol Heath Green (manufactured by Vivimed Labs Ltd.) as a photochromic compound were added to 46.2 pbw of 3-isocyanatomethyl-3,5,5-trimethylcyclohexyl isocyanate, and 3,000 ppm of dimethyltin dichloride, and 3,000 ppm of butoxyethyl acid phosphate as an internal release agent were mixing and stirring were performed for dissolution. 23.7 pbw of polypropylene glycol (triol type) having a number average molecular weight of 1,500 and 30.1 pbw of a composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane were added to this mixed liquid, and mixing and stirring were continued. Thereafter, degassing was performed with a vacuum pump, and this solution was cast into a glass mold. This was polymerized in the range of 30°C to 120°C for 14 hours, the mold was extracted from the furnace, and the mold was removed, to extract a molded product (disc-shaped product having a diameter of 80 mm and a thickness of 2 mm) obtained by polymerization.

The molded product was colorless and transparent, and had a satisfactory light control performance of being immediately colored in purple in a case of being put placed under sunlight and being decolored in a case where the light ray was shielded. The light control performance of the molded product was evaluated, so as to exhibit a satisfactory result in which a change amount (ΔT%max) of light transmittance before and after the color development at the maximum absorption wavelength (λmax: 550 nm) was 71.1%. The same measurement was further performed after a light resistance test was performed with an ultraviolet irradiator. The difference between change amounts (ΔT%max) of light transmittance before and after the color development in the maximum absorption wavelength (λmax: 550 nm) was 35.2%, and it was indicated that the change amount of light transmittance before and after the color development was decreased after the light resistance test. As a yellowing evaluation of the resin, change amounts (ΔT%) of light transmittance before and after the light resistance test was performed with an ultraviolet irradiator at an absorption wavelength of 440 nm in a stage before the color development were compared. As a result, the difference between the change amounts was 33.6%, which is greatly decreased. The compositions are presented in Table-1, and a measurement result of physical properties is presented in Table-2.

### [Table 1]

**Table-1**

| | Component A (part by weight) | Component B (part by weight) | Component C (part by weight) | Component D (ppm) | Component F (ppm) | Component E (UV absorber) | | | |
|---|---|---|---|---|---|---|---|---|---|
| | | | | | | Trade name | Addition amount (ppm) | Maximum absorption wavelength (nm) | *1 |
| Example 1 | Compound A1 46.2 | Compound B1 23.7 | Compound C1 30.1 | D1: 570 ppm D2: 300 ppm | - | HOSTAVIN PR 25 | 5000 | 311 | 0.01 |
| Example 2 | Compound A1 46.2 | Compound B1 23.7 | Compound C1 30.1 | D1: 570 ppm D2: 300 ppm | - | HOSTAVIN PR 25 | 10000 | 311 | 0.01 |
| Example 3 | Compound A1 46.2 | Compound B1 23.7 | Compound C1 30.1 | D1: 570 ppm D2: 300 ppm | - | HOSTAVIN VSU | 5000 | 297 | 0.03 |
| Example 4 | Compound A1 46.2 | Compound B1 23.7 | Compound C1 30.1 | D1: 570 ppm D2: 300 ppm | - | HOSTAVIN VSU | 10000 | 297 | 0.03 |
| Example 5 | Compound A1 46.2 | Compound B1 23.7 | Compound C1 30.1 | D3: 570 ppm D2: 310 ppm | - | HOSTAVIN PR 25 | 5000 | 311 | 0.01 |
| Example 6 | Compound A1 46.2 | Compound B1 23.7 | Compound C1 30.1 | D3: 570 ppm D2: 310 ppm | - | HOSTAVIN PR 25 | 10000 | 311 | 0.01 |
| Example 7 | Compound A1 46.2 | Compound B1 23.7 | Compound C1 30.1 | D3: 570 ppm D2: 310 ppm | - | HOSTAVIN VSU | 5000 | 297 | 0.03 |
| Example 8 | Compound A1 46.2 | Compound B1 23.7 | Compound C1 30.1 | D3: 570 ppm D2: 310 ppm | - | HOSTAVIN VSU | 10000 | 297 | 0.03 |
| Example 9 | Compound A1 46.2 | Compound B1 23.7 | Compound C1 30.1 | D4: 350 ppm D2: 550 ppm | - | HOSTAVIN PR 25 | 10000 | 311 | 0.01 |
| Example 10 | Compound A1 46.2 | Compound B1 23.7 | Compound C1 30.1 | D4: 350 ppm D2: 550 ppm | - | HOSTAVIN VSU | 10000 | 297 | 0.03 |
| Comparative Example 11 | Compound A1 46.2 | Compound B1 23.7 | Compound C1 30.1 | D1: 570 ppm D2: 300 ppm | - | Seesorb 107 | 200 | 348 | 0.83 |
| Comparative Example 12 | Compound A1 46.2 | Compound B1 23.7 | Compound C1 30.1 | D1: 570 ppm D2: 300 ppm | - | Seesorb 107 | 500 | 348 | 0.83 |
| Comparative Example 13 | Compound A1 46.2 | Compound B1 23.7 | Compound C1 30.1 | D1: 570 ppm D2: 300 ppm | - | Seesorb 107 | 1000 | 348 | 0.83 |
| Comparative Example 14 | Compound A1 46.2 | Compound B1 23.7 | Compound C1 30.1 | D1: 570 ppm D2: 300 ppm | - | Seesorb 107 | 2000 | 348 | 0.83 |
| Comparative Example 15 | Compound A1 46.2 | Compound B1 23.7 | Compound C1 30.1 | D1: 570 ppm D2: 300 ppm | - | Viosorb 583 | 500 | 337 | 0.51 |

| | | | | | | | | | |
|---|---|---|---|---|---|---|---|---|---|
| *1: A ratio of an absorbance at 360 nm with respect to an absorbance at a maximum absorption wavelength | | | | | | | | | |

### [Table 2]

**Table-1 (continued)**

| | Component A (part by weight) | Component B (part by weight) | Component C (part by weight) | Component D (ppm) | Component F (ppm) | Component E (UV absorber) | | | |
|---|---|---|---|---|---|---|---|---|---|
| | | | | | | Trade name | Addition amount (ppm) | Maximum absorption wavelength (nm) | *1 |
| Comparative Example 16 | Compound A1 46.2 | Compound B1 23.7 | Compound C1 30.1 | D1: 570 ppm D2: 300 ppm | - | Viosorb 583 | 1000 | 337 | 0.51 |
| Comparative Example 17 | Compound A1 46.2 | Compound B1 23.7 | Compound C1 30.1 | D1: 570 ppm 02: 300 ppm | - | Viosorb 583 | 2500 | 337 | 0.51 |
| Comparative Example 18 | Compound A1 46.2 | Compound B1 23.7 | Compound C1 30.1 | D1: 570 ppm D2: 300 ppm | - | Viosorb 583 | 5000 | 337 | 0.51 |
| Comparative Example 19 | Ccmpound A1 46.2 | Compound B1 23.7 | Compound C1 30.1 | D1: 570 ppm D2: 300 ppm | - | TINUVIN 405 | 500 | 287 | 0.12 |
| Comparative Example 20 | Compound A1 46.2 | Compound B1 23.7 | Compound C1 30.1 | D1: 570 ppm D2:300 ppm | - | TINUVIN 405 | 1000 | 287 | 0.12 |
| Comparative Example 21 | Ccmpound A1 46.2 | Compound B1 23.7 | Compound C1 30.1 | D1: 570 ppm D2: 300 ppm | - | TINUVIN 405 | 2500 | 287 | 0.12 |
| Comparative Example 22 | Compound A1 46.2 | Campound B1 23.7 | Compound C1 30.1 | D1: 570 ppm D2: 300 ppm | - | TINUVIN 405 | 5000 | 287 | 0.12 |
| Comparative Example 23 | Compound A1 46.2 | Compound B1 23.7 | Compound C1 30.1 | D1: 570 ppm D2: 300 ppm | - | TINUVIN PS | 500 | 335 | 0.45 |
| Comparative Example 24 | Compound A1 46.2 | Compound B1 23.7 | Compound C1 30.1 | D1: 570 ppm D2: 300 ppm | - | TINUVIN PS | 1000 | 335 | 0.45 |
| Comparative Example 25 | Ccmpound A1 46.2 | Compound B1 23.7 | Compound C1 30.1 | D1: 570 ppm D2: 300 ppm | - | TINUVIN PS | 2500 | 335 | 0.45 |
| Comparative Example 26 | Compound A1 46.2 | Compound B1 23.7 | Compound C1 30.1 | D1: 570 ppm D2: 300 ppm | - | TINUVIN PS | 5000 | 335 | 0.45 |
| Example 27 | Compound A1 46.2 | Compound B1 23.7 | Compound C1 30.1 | D3: 570 ppm D2: 310 ppm | LA-72 3000 ppm | HOSTAVIN PR 25 | 10000 | 311 | 0.01 |
| Example 28 | Compound A1 46.2 | Compound B1 23.7 | Compound C1 30.1 | D5: 430 ppm D2; 960 ppm | LA-72 3000 ppm | HOSTAVIN PR 25 | 10000 | 311 | 0.01 |
| Example 29 | Compound A2 48.7 | Conpound B2 5.9 | Compound C1 30.0 Compound C2 15.4 | D3: 684 ppm D2: 372 ppm | - | HOSTAVIN PR 25 | 10000 | 311 | 0.01 |
| Example 30 | Compund A3 47.2 Compound A4 7.6 | Compound B2 5.6 | Compound C1 39.6 | D3: 684 ppm D2P: 372 ppm | | HOSTAVIN PR 25 | 10000 | 311 | 0.01 |
| Example 31 | Compound A5 50.9 | Compound B2 6.3 | Ccmpound C3 42.8 | D3: 684 ppm D2: 372 ppm | | HOSTAVIN PR 25 | 10000 | 311 | 0.01 |
| Example 32 | Compound A6 50.9 | Compound B2 6.3 | Compound C3 42.8 | D3: 684 ppm D2: 372 ppm | | HOSTAVIN PR 25 | 10000 | 311 | 0.01 |
| Example 33 | Compound A2 50.2 | Compound B3 13.9 | Compound C1 35.9 | D3: 570 ppm D2: 310 ppm | | HC6TAVIN PR 25 | 10000 | 311 | 0,01 |
| Example 34 | Compound A2 49.2 | Compound B1 13.7 | Compound C1 37.1 | D3: 570 ppm D2: 310 ppm | | HOSTAVIN PR 25 | 10000 | 311 | 0.01 |
| Comparative Example 1 | Compound A1 46.2 | Compound B1 23.7 | Compound C1 30.1 | D1: 570 ppm D2: 300 ppm | - | - | - | - | - |
| Comparative Example 2 | Compound A1 46.2 | Compound B1 23.7 | Compound C1 30.1 | D4: 350 ppm D2: 550 ppm | - | - | - | - | - |
| Comparative Example 3 | Compound A1 46.2 | Compound B1 23.7 | Compound C1 30.1 | D3: 570 ppm D2: 310 ppm | - | - | - | - | - |

| | | | | | | | | | |
|---|---|---|---|---|---|---|---|---|---|
| *1: A ratio of an absorbance at 360 nm with respect to an absorbance at a maximum absorption wavelength | | | | | | | | | |

Compounds presented in Table-1 are as follows.
- Compound A1: 3-isocyanatomethyl-3,5,5-trimethylcyclohexyl isocyanate
- Compound A2: Composition including 2,5-bis (isocyanatomethyl) bicyclo-[2.2.1]-heptane and 2,6-bis(isocyanatomethyl) bicyclo-[2.2.1]-heptane
- Compound A3: Composition including dicyclohexylmethane-4,4'-diisocyanate and dicyclohexylmethane-2,4'-diisocyanate
- Compound A4: Hexamethylene diisocyanate
- Compound A5: m-Xylylene diisocyanate
- Compound A6: p-Xylylene diisocyanate
- Compound B1: Polypropylene glycol having number average molecular weight of 1,500 (triol type)
- Compound B2: Polypropylene glycol having number average molecular weight of 1,250 (diol type)
- Compound B3: Polypropylene glycol having number average molecular weight of 1,000 (diol type)
- Compound C1: Composition including 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane
- Compound C2: Composition including pentaerythritol tetrakis(2-mercaptoacetate) and pentaerythritol tetrakis(3-mercaptopropionate)
- Compound C3: Composition including 1,2-bis(mercaptomethylthio) ethane, 1,2-bis(2-mercaptoethylthio) ethane, and 1,2-bis(3-mercaptopropylthio) ethane
- D1: Reversacol Trent Blue
- D2: Reversacol Heath Green
- D3: Reversacol Wembley Grey
- D4: Reversacol Chilli Red
- D5: Cayenne Red

### [Table 3]

**Table-2**

| Example | Optical physical properties | | | Light control performance | light resistance | |
|---|---|---|---|---|---|---|
| | Transparency | refractive index (ne) | Abbe number (ve) | (ΔT%max) 550 nm | (ΔT%) 440 nm | (ΔT%) 550 nm |
| Example 1 | Existence | 1.56 | 40 | 59.2 | 11.5 | 15.8 |
| Example 2 | Existence | 1.56 | 40 | 58.4 | 7.9 | 13.3 |
| Example 3 | Existence | 1.56 | 40 | 60.4 | 12.3 | 16.3 |
| Example 4 | Existence | 1.56 | 40 | 60.9 | 5.9 | 10.0 |
| Example 5 | Existence | 1.56 | 40 | 68.5 | 11.8 | 11.7 |
| Example 6 | Existence | 1.56 | 40 | 67.3 | 7.7 | 8.9 |
| Example 7 | Existence | 1.56 | 40 | 67.7 | 12.2 | 11.3 |
| Example 8 | Existence | 1.56 | 40 | 66.9 | 8.1 | 8.5 |
| Example 9 | Existence | 1.56 | 40 | 49.6 | 8.5 | 9.6 |
| Example 10 | Existence | 1.56 | 40 | 52.7 | 9.9 | 11.5 |
| Comparative Example 11 | Existence | 1.56 | 40 | 55.8 | 5.2 | 14.8 |
| Comparative Example 12 | Existence | 1.56 | 40 | 49.3 | 4.6 | 13.0 |
| Comparative Example 13 | Existence | 1.56 | 40 | 41.9 | 4.1 | 10.9 |
| Comparative Example 14 | Existence | 1.56 | 40 | 34.1 | 3.5 | 10.3 |
| Comparative Example 15 | Existence | 1.56 | 40 | 45.8 | 14.8 | 12.2 |
| Comparative Example 16 | Existence | 1.56 | 40 | 42.7 | 12.4 | 8.9 |
| Comparative Example 17 | Existence | 1.56 | 40 | 38.1 | 8.2 | 3.7 |
| Comparative Example 18 | Existence | 1.56 | 40 | 37.0 | 5.1 | 2.1 |
| Comparative Example 19 | Existence | 1.56 | 40 | 53.2 | 13.8 | 17.8 |
| Comparative Example 20 | Existence | 1.56 | 40 | 53.1 | 10.9 | 15.6 |
| Comparative Example 21 | Existence | 1.56 | 40 | 50.0 | 8.1 | 13.3 |
| Comparative Example 22 | Existence | 1.56 | 40 | 49.7 | 5.1 | 11.5 |
| Comparative Example 23 | Existence | 1.56 | 40 | 49.9 | 16.6 | 14.3 |
| Comparative Example 24 | Existence | 1.56 | 40 | 49.1 | 13.2 | 11.3 |
| Comparative Example 25 | Existence | 1.56 | 40 | 46.8 | 12.1 | 8.6 |
| Comparative Example 26 | Existence | 1.56 | 40 | 43.9 | 8.5 | 5.6 |
| Example 27 | Existence | 1.56 | 40 | 64.9 | 12.1 | 2.1 |
| Example 28 | Existence | 1.56 | 40 | 54.1 | 15.8 | 4.2 |
| Example 29 | Existence | 1.60 | 40 | 65.7 | 6.1 | 1.1 |
| Example 30 | Existence | 1.60 | 38 | 62.7 | 11.7 | 1.2 |
| Example 31 | Existence | 1.61 | 38 | 69.1 | 5.0 | 1.2 |
| Example 32 | Existence | 1.61 | 38 | 68.6 | 3.8 | 0.8 |
| Example 33 | Existence | 1.60 | 40 | 70.0 | 6.5 | 2.1 |
| Example 34 | Existence | 1.60 | 40 | 67.1 | 9.5 | 2.9 |
| Comparative Example 1 | Existence | 1.56 | 40 | 59.7 | 29.2 | 26.7 |
| Comparative Example 2 | Existence | 1.56 | 40 | 49.6 | 27.5 | 31.1 |
| Comparative Example 3 | Existence | 1.56 | 40 | 71.1 | 33.6 | 35.2 |

In the above, the photochromic optical material of the present invention obtained by polymerizing the polymerizable composition including the difunctional or higher functional polyisocyanate compound (A), the polyol compound (B) having a number average molecular weight of 100 or more, the difunctional or higher functional active hydrogen compound (C), the photochromic compound (D), and the ultraviolet absorber (E) can provide light resistance and high photochromic performance beyond examples in the related art in a poly(thio)urethane resin. In view of the results of the light resistance test (accelerated test), it was clear that the decrease of the photochromic performance over time was prominently suppressed. In a case where the light stabilizer (F) was included, it was clear that the effect is further improved. Accordingly, the photochromic optical material of the present invention is very useful as an optical material having a photochromic performance, which is used in a spectacle lens.

Among the examples, in a case where a malonate ester-based ultraviolet absorber (Hostavin PR 25) or an oxanilide-based ultraviolet absorber (Hostavin VSU) was used as the ultraviolet absorber, light resistance and a photochromic performance are particularly excellent, and the decrease of the photochromic performance over time was prominently suppressed, and thus a balance on these characteristics was excellent. Specifically, it was indicated that a change amount (ΔT%max) of light transmittance before and after the color development was 50% or more, and thus a photochromic performance was excellent. Further, it was indicated that 440 nm (ΔT%) was 20% or less, and 550 nm(ΔT%) was 20% or less, and thus light resistance was excellent, and decrease of the photochromic performance over time was prominently suppressed, and a balance of these characteristics was excellent.

According to the manufacturing method of the present invention, a polymerizable composition was prepared by dissolving the photochromic compound (D) and the ultraviolet absorber (E) in advance in a monomer mixture including the difunctional or higher functional polyisocyanate compound (A), the polyol compound (B) having a number average molecular weight of 100 or more, and the difunctional or higher functional active hydrogen compound (C), the composition was injected to a mold, and polymerization was performed, so as to obtain a photochromic lens. Further, the same applies in a case where the light stabilizer (F) was included. That is, since light control performances is provided at the time of lens molding, there is no need to provide a coating layer for giving a photochromic performance, the number of processes in the manufacturing decreases, the production efficiency increases, and the production cost is superior. Since it is easy to evenly disperse the photochromic compound in the lens substrate which can be obtained by curing the polymerizable composition, it is very useful as a method of producing a large amount of lenses with stable quality having a constant light control performance, regardless of the shape of the lens.

It is assumed that the same result would be obtained with the plastic polarized lens.

This application claims priority based on Japanese Patent Application No. 2015-183495 filed on September 16, 2015, and priority based on Japanese Patent Application No. 2015-211249 filed on October 27, 2015, and Japanese Patent Application No. 2015-240359 filed on December 9, 2015

## Claims

1. A polymerizable composition for an optical material, comprising:
a polyisocyanate compound (A);
a polyol compound (B) having a number average molecular weight of 100 or more;
a difunctional or higher functional active hydrogen compound (C), wherein the compound (C) does not contain the compound (B);
a photochromic compound (D); and
an ultraviolet absorber (E) wherein the photochromic compound (D) is at least one kind selected from following Formulae (1) and (2), and
the ultraviolet absorber (E) is an ultraviolet absorber in which a maximum absorption wavelength is 330 nm or less, and a ratio of an absorbance at 360 nm is 0.1 or less with respect to an absorbance at the maximum absorption wavelength,
PC-L-Chain (1)
PC-L-Chain-L'-PC' (2)
wherein, in Formula (1) or (2), PC and PC' represent monovalent groups derived from compounds of Formulae (3) to (6), and PC and PC' may be identical to or different from each other, 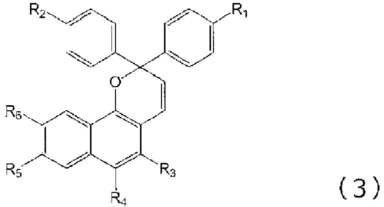 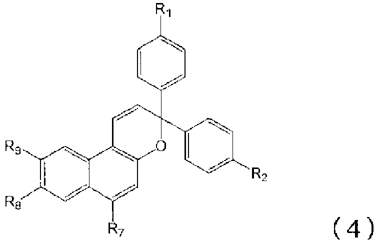 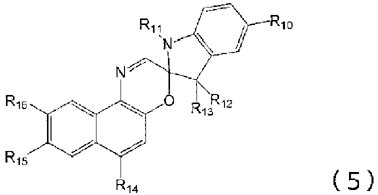 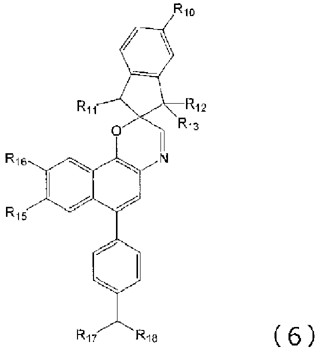
wherein, in Formulae (3) to (6), R1 to R18 represent hydrogen, a halogen atom, a carboxyl group, an acetyl group, a formyl group, an optionally substituted C1 to C20 aliphatic group, an optionally substituted C3 to C20 alicyclic group, and an optionally substituted C6 to C20 aromatic organic group, and may be identical to or different from each other, the aliphatic group, the alicyclic group, or the aromatic organic group may contain an oxygen atom and/or a nitrogen atom, and any one group included in the compound represented by Formulae (3) to (6) is bonded to L or L' which is a divalent organic group,
wherein, in Formula (1) or (2), L and L' each represent a divalent organic group including at least one kind of group selected from an oxyethylene chain, an oxypropylene chain, a (thio) ester group, and a (thio)amide group, and
wherein, in Formula (1) or (2), Chain represents a monovalent or divalent organic group including at least one kind of chain selected from a polysiloxane chain and a polyoxyalkylene chain.

2. The polymerizable composition for an optical material according to claim 1,
wherein the polyisocyanate compound (A) is at least one kind selected from the group consisting of hexamethylene diisocyanate, pentamethylene diisocyanate, xylylene diisocyanate, isophorone diisocyanate, bis(isocyanatomethyl) cyclohexane, dicyclohexylmethane diisocyanate, 2,5-bis(isocyanatomethyl) bicyclo-[2.2.1]-heptane, 2,6-bis(isocyanatomethyl) bicyclo-[2.2.1]-heptane, tolylene diisocyanate, phenylene diisocyanate, and diphenylmethane diisocyanate.

3. The polymerizable composition for an optical material according to claim 1 or 2,
wherein the polyol compound (B) is a diol type or a triol type of polyethylene glycol or polypropylene glycol.

4. The polymerizable composition for an optical material according to any one of claims 1 to 3,
wherein a number average molecular weight of the polyol compound (B) is 200 to 4,000.

5. The polymerizable composition for an optical material according to any one of claims 1 to 4,
wherein the active hydrogen compound (C) is at least one kind selected from the group consisting of a polyol compound, a polythiol compound, and a thiol compound having a hydroxy group.

6. The polymerizable composition for an optical material according to any one of claims 1 to 5,
wherein the active hydrogen compound (C) is a trifunctional or higher functional active hydrogen compound.

7. The polymerizable composition for an optical material according to any one of claims 1 to 6,
wherein the active hydrogen compound (C) is at least one kind selected from the group consisting of glycerin, pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate).

8. The polymerizable composition for an optical material according to any one of claims 1 to 7, further comprising:
a light stabilizer (F).

9. The polymerizable composition for an optical material according to claim 8,
wherein the light stabilizer (F) comprises a hindered amine-based light stabilizer.

10. A molded product comprising a cured product of the polymerizable composition for an optical material according to any one of claims 1 to 9.

11. An optical material comprising the molded product according to claim 10.

12. A plastic lens comprising the molded product according to claim 10.

13. A plastic polarized lens comprising:
a polarizing film; and
a substrate layer which comprises the molded product according to claim 10 and is formed on at least one surface of the polarizing film.

## Patentansprüche

1. Polymerisierbare Zusammensetzung für ein optisches Material, das Folgendes umfasst:
eine Polyisocyanat-Verbindung (A);
eine Polyol-Verbindung (B) mit einem zahlenmittleren Molekulargewicht von 100 oder mehr;
eine difuktionelle oder höherfunktionelle Verbindung (C) mit aktivem Wasserstoff, wobei die Verbindung (C) nicht die Verbindung (B) enthält;
eine photochrome Verbindung (D); und
einen Ultraviolettabsorber (E),
wobei die photochrome Verbindung (D) zumindest eine aus den folgenden Formeln (1) und (2) ausgewählte Art ist und
der Ultraviolettabsorber (E) ein Ultraviolettabsorber ist, bei dem die Wellenlänge des Absorptionsmaximums 330 nm oder weniger ist und die Absorptionsrate bei 360 nm 0,1 oder weniger, bezogen auf die Absorption bei der Wellenlänge des Absorptionsmaximums ist,
PC-L-Kette (1)
PC-L-Kette-L'-PC' (2)
wobei in Formel (1) bzw. (2) PC und PC' für einwertige Gruppen stehen, die von Verbindungen der Formel (3) bis (6) abgeleitet sind, und PC und PC' gleich oder voneinander verschieden sein können, 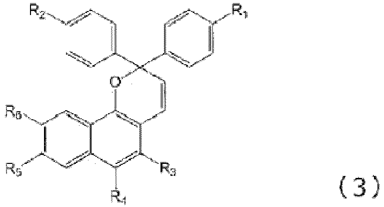 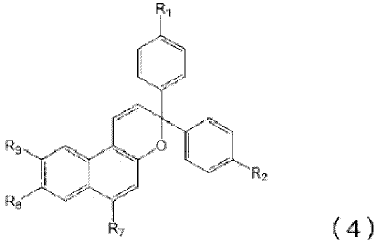 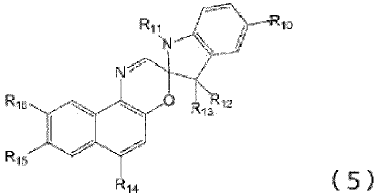 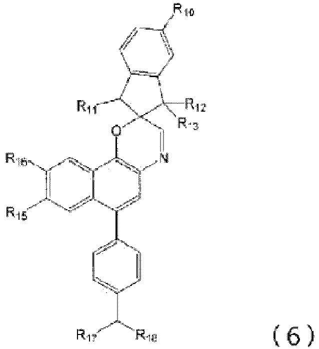
wobei in den Formeln (3) bis (6) R₁ bis R₁₈ für Wasserstoff, ein Halogenatom, eine Carboxylgruppe, eine Acetylgruppe, eine Formylgruppe, eine gegebenenfalls substituierte aliphatische C₁- bis C₂₀-Gruppe, eine gegebenenfalls substituierte alizyklische C₃- bis C₂₀-Gruppe oder eine gegebenenfalls substituierte, aromatische organische C₆-bis C₂₀-Gruppe stehen und gleich oder voneinander verschieden sein können, wobei die aliphatische Gruppe, die alizyklische Gruppe oder die aromatische organische Gruppe gegebenenfalls ein Sauerstoffatom und/oder ein Stickstoffatom enthalten und jede Gruppe, die in einer durch die Formeln (3) bis (6) dargestellten Verbindung enthalten ist, an L oder L' gebunden ist, bei denen es sich um eine zweiwertige organische Gruppe handelt;
wobei in Formel (1) oder (2) L und L' jeweils für eine zweiwertige organische Gruppe stehen, die zumindest eine Art von Gruppe, ausgewählt aus einer Oxyethylen-Kette, einer Oxypropylen-Kette, einer (Thio-)Estergruppe und einer (Thio-)Amidgruppe umfasst; und
wobei in Formel (1) oder (2) Kette für eine einwertige oder zweiwertige organische Gruppe steht, die zumindest eine Art von Kette, ausgewählt aus einer Polysiloxan-Kette und einer Polyoxyalkylen-Kette umfasst.

2. Polymerisierbare Zusammensetzung für ein optisches Material nach Anspruch 1,
wobei die Polyisocyanat-Verbindung (A) zumindest eine Art, ausgewählt aus der aus Hexamethylendiisocyanat, Pentamethylendiisocyanat, Xylylendiisocyanat, Isophorondiisocyanat, Bis(isocyanatomethyl)cyclohexan, Dicyclohexylmethandiisocyanat, 2,5-Bis-(isocyanatomethyl)bicyclo-[2.2.1]-heptan, 2,6-Bis(isocyanatomethyl)bicyclo-[2.2.1]-heptan, Tolylendiisocyanat, Phenylendiisocyanat und Diphenylmethandiisocyanat bestehenden Gruppe ist.

3. Polymerisierbare Zusammensetzung für ein optisches Material nach Anspruch 1 oder 2,
wobei die Polyol-Verbindung (B) ein Diol-Typ oder ein Triol-Typ von Polyethylenglykol oder Polypropylenglykol ist.

4. Polymerisierbare Zusammensetzung für ein optisches Material nach einem der Ansprüche 1 bis 3,
wobei das zahlenmittlere Molekulargewicht der Polyol-Verbindung (B) 200 bis 4.000 beträgt.

5. Polymerisierbare Zusammensetzung für ein optisches Material nach einem der Ansprüche 1 bis 4,
wobei die Verbindung (C) mit aktivem Wasserstoff zumindest eine Art, ausgewählt aus der aus einer Polyol-Verbindung, einer Polythiol-Verbindung und einer Thiol-Verbindung mit einer Hydroxygruppe bestehenden Gruppe ist.

6. Polymerisierbare Zusammensetzung für ein optisches Material nach einem der Ansprüche 1 bis 5,
wobei die Verbindung (C) mit aktivem Wasserstoff eine trifunktionelle oder höherfunktionelle Verbindung mit aktivem Wasserstoff ist.

7. Polymerisierbare Zusammensetzung für ein optisches Material nach einem der Ansprüche 1 bis 6,
wobei die Verbindung (C) mit aktivem Wasserstoff zumindest eine Art, ausgewählt aus der aus Glycerin, Pentaerythrit-tetrakis(2-mercaptoacetat), Pentaerythrit-tetrakis(3-mer-captopropionat), 4-Mercaptomethyl-1,8-dimercapto-3,6-dithiaoctan, 5,7-Dimercaptomethyl-1,11-dimercapto-3,6,9-trithiaundecan, 4,7-Dimercaptomethyl-1,11-dimercapto-3,6,9-trithia-undecan, 4,8-Dimercaptomethyl-1,11-dimercapto-3,6,9-trithiaundecan, 1,1,3,3-Tetrakis-(mercaptomethylthio)propan und Trimethylolpropan-tris(3-mercaptopropionat) bestehenden Gruppe ist.

8. Polymerisierbare Zusammensetzung für ein optisches Material nach einem der Ansprüche 1 bis 7, die weiters Folgendes umfasst:
einen Lichtstabilisator (F).

9. Polymerisierbare Zusammensetzung für ein optisches Material nach Anspruch 8,
wobei der Lichtstabilisator (F) einen sterisch gehinderten Lichtstabilisator auf Aminbasis umfasst.

10. Geformtes Produkt, das ein gehärtetes Produkt aus einer polymerisierbaren Zusammensetzung für ein optisches Material nach einem der Ansprüche 1 bis 9 umfasst.

11. Optisches Material, das ein geformtes Produkt nach Anspruch 10 umfasst.

12. Kunststofflinse, die ein geformtes Produkt nach Anspruch 10 umfasst.

13. Polarisierte Kunststofflinse, die Folgendes umfasst:
eine Polarisationsfolie; und
eine Substratschicht, die ein geformtes Produkt nach Anspruch 10 umfasst und auf zumindest einer Oberfläche der Polarisationsfolie ausgebildet ist.

## Revendications

1. Composition polymérisable pour un matériau optique, comprenant :
un composé polyisocyanate (A) ;
un composé polyol (B) présentant un poids moléculaire moyen en nombre égal ou supérieur à 100 ;
un composé d'hydrogène actif bifonctionnel ou à fonctionnalité supérieure (C), dans laquelle le composé (C) ne contient pas le composé (B) ;
un composé photochromique (D) ;
un absorbant d'ultraviolets (E), dans laquelle le composé photochromique (D) est au moins un type choisi parmi les formules (1) et (2) qui suivent, et
l'absorbant d'ultraviolets (E) est un absorbant d'ultraviolets dans lequel une longueur d'onde d'absorption maximale inférieure ou égale à 330 nm, et un rapport d'une absorbance à 360 nm est inférieure ou égale à 0,1 par rapport à une absorbance à la longueur d'onde d'absorption maximale,
PC-L-Chain (1)
PC-L-Chain-L'-PC' (2)
dans laquelle, dans la formule (1) ou (2), PC et PC' représentent des groupes monovalents dérivés de composés de formules (3) à (6), et PC et PC' peuvent être identiques l'un à l'autre ou différents l'un de l'autre, 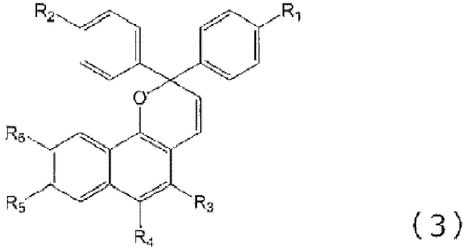 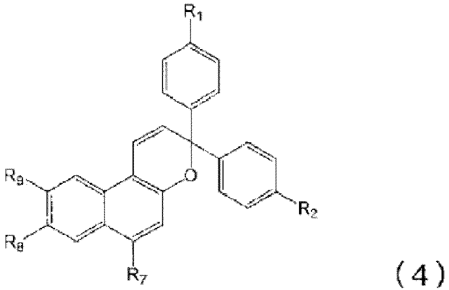 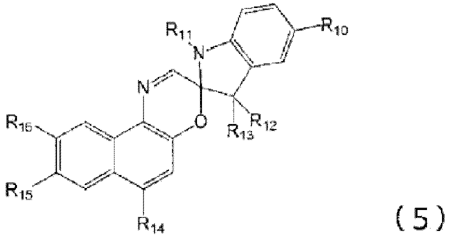 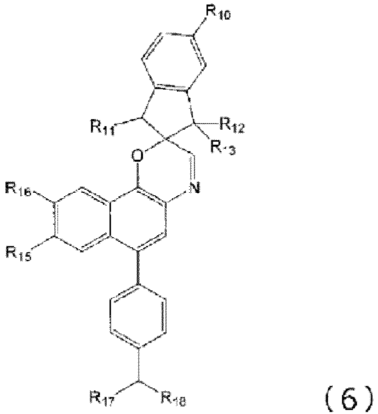
dans laquelle, dans les formules (3) à (6), R1 à R18 représentent de l'hydrogène, un atome d'halogène, un groupe carboxyle, un groupe acétyle, un groupe formyle, un groupe aliphatique en C1 à C20 facultativement substitué, un groupe alicyclique en C3 à C20 facultativement substitué, et un groupe organique aromatique en C6 à C20 facultativement substitué, et peuvent être identiques ou différents les uns des autres, le groupe aliphatique, le groupe alicyclique, ou le groupe organique aromatique peut contenir un atome d'oxygène et/ou un atome d'azote, et tout groupe inclus dans le composé représenté par les formules (3) à (6) est lié à L ou L' qui est un groupe organique divalent,
dans laquelle, dans la formule (1) ou (2), L et L' représentent chacun un groupe organique divalent incluant au moins un type de groupe choisi parmi une chaîne oxyéthylène, une chaîne oxypropylène, un groupe (thio)ester, et un groupe (thio)amide, et
dans laquelle, dans la formule (1) ou (2), Chain représente un groupe organique monovalent ou divalent inclut au moins un type de chaîne choisi parmi une chaîne polysiloxane et une chaîne polyoxyalkylène.

2. Composition polymérisable pour un matériau optique selon la revendication 1,
dans laquelle le composé polyisocyanate (A) est au moins un type choisi dans le groupe constitué de diisocyanate d'hexaméthylène, diisocyanate de pentaméthylène, diisocyanate de xylylène, diisocyanate d'isophorone, bis(isocyanatométhyl) cyclohexane, diisocyanate de dicyclohexylméthane, 2,5-bis(isocyanatométhyl) bicyclo-[2.2.1]-heptane, 2,6-bis(isocyanatométhyl) bicyclo-[2.2.1]-heptane, diisocyanate de tolylène, diisocyanate de phénylène, et diisocyanate de diphénylméthane.

3. Composition polymérisable pour un matériau optique selon la revendication 1 ou 2,
dans laquelle le composé polyol (B) est de type diol ou de type triol de polyéthylène glycol ou de polypropylène glycol.

4. Composition polymérisable pour un matériau optique selon l'une quelconque des revendications 1 à 3,
dans laquelle le poids moléculaire moyen en nombre du composé polyol (B) est compris entre 200 et 4 000.

5. Composition polymérisable pour un matériau optique selon l'une quelconque des revendications 1 à 4,
dans laquelle le composé d'hydrogène actif (C) est au moins un type choisi dans le groupe constitué d'un composé polyol, d'un composé polythiol et d'un composé thiol présentant un groupe hydroxy.

6. Composition polymérisable pour un matériau optique selon l'une quelconque des revendications 1 à 5,
dans laquelle le composé d'hydrogène actif (C) est un composé d'hydrogène actif trifonctionnel ou à fonctionnalité supérieure.

7. Composition polymérisable pour un matériau optique selon l'une quelconque des revendications 1 à 6,
dans laquelle le composé d'hydrogène actif (C) est au moins un type choisi dans le groupe constitué de glycérine, de tétrakis(2-mercaptoacétate) de pentaérythritol, de tétrakis(3-mercaptopropionate) de pentaérythritol, de 4-mercaptométhyl-1,8-dimercapto-3,6-dithiaoctane, de 5,7-dimercaptométhyl-1,11-dimercapto-3,6,9-trithiaundécane, de 4,7-dimercaptométhyl-1,11-dimercapto-3,6,9-trithiaundécane, de 4,8-dimercaptométhyl-1,11-dimercapto-3,6,9-trithiaundécane, de 1,1,3,3-tétrakis(mercaptométhylthio) propane, et de triméthylolpropane tris(3-mercaptopropionate).

8. Composition polymérisable pour un matériau optique selon l'une quelconque des revendications 1 à 7, comprenant en outre :
un photostabilisant (F).

9. Composition polymérisable pour un matériau optique selon la revendication 8,
dans laquelle le photostabilisant (F) comprend un photostabilisant à base d'amine encombrée.

10. Produit moulé comprenant un produit durci de la composition polymérisable pour un matériau optique polymérisable selon l'une quelconque des revendications 1 à 9.

11. Matériau optique comprenant le produit moulé selon la revendication 10.

12. Lentille en matière plastique comprenant le produit moulé selon la revendication 10.

13. Lentille polarisée en matière plastique, comprenant :
un film polarisant ; et
*une* couche de substrat qui comprend le produit moulé selon la revendication 10 et qui est formée sur au moins une surface du film polarisant.
